# EUROPEAN PATENT APPLICATION

(11) **EP 4 783 008 A1**
(43) Date of publication of application: **29.07.2026**
(21) Application number: 26153905.0
(22) Date of filing: 23.01.2026
(51) Int. Cl.: G06F 9/54

(54) **UNRELIABLE, UNORDERED DATA TRANSFERS ON A MEMORY FABRIC**

(30) Priority: 23.01.2025 US 202519035591
(71) Applicant: Nvidia Corporation, Santa Clara, CA 95051 (US)
(72) Inventor: HUMMEL, Mark, Santa Clara, 95051 (US); ALBEN, Jonah, Santa Clara, 95051 (US); VENKATARAMAN, Vyas, Santa Clara, 95051 (US); DINAN, James, Santa Clara, 95051 (US); JIANG, Nan, Santa Clara, 95051 (US); KRISHNAN, Venkata, Santa Clara, 95051 (US)
(74) Representative: Mathys & Squire

(57) **Abstract**

Inter-process communication methods that divide a total payload of a first memory command among a plurality of packets and that encode a last-transmitted packet of the plurality of packets to include a metadata code in the total payload. The memory command may be communicated between processes executing a collective operation. Payloads of the packets are written to memory in a sequential address order, such that the metadata code is written to a particular address, and the second process generates an acknowledgment of the first memory command to the first process on condition that reading the particular address returns the metadata code.

## Description

### BACKGROUND

Many networks provide reliable data communication protocols. In such networks loss or corruption that occurs during data transmission may be detected and corrected by the protocol stack, for example by end-to-end retransmission of the lost or corrupted data.

Other networks operate using unreliable protocols. Conventional unreliable protocol modes operate at message or packet granularities. A data transmission or command execution failure may be reported to the application layer through a completion queue or metadata contained within the data payload of the packet, e.g. a sequence number. This enables the application layer of the transmission initiator to identify the nature of the failure and retransmit as needed to correct the error.

For example, some data processor implementations may utilize unreliable protocols to communicate memory operations (e.g., LOAD or STORE) between processing units. These processors may implement a memory model that requires memory STORE operations to be reliable and to preserve the ordering of memory commands that operate on the same memory address.

These constraints may be challenging to implement in large-scale memory fabrics. Losing a STORE command due to a network failure negatively impacts resilience. Performance may also be negatively impacted because STORE commands cannot be adaptively routed to avoid congestion or load balance traffic in the network (e.g., because of failed links). It may also be necessary to individually acknowledge STORE commands, consuming bandwidth and power in the network.

### SUMMARY

The invention is defined by the claims. In order to illustrate the invention, aspects and embodiments which may or may not fall within the scope of the claims are described herein.

Inter-process communication methods that divide a total payload of a first memory command among a plurality of packets and that encode a last-transmitted packet of the plurality of packets to include a metadata code in the total payload. The memory command may be communicated between processes executing a collective operation. Payloads of the packets are written to memory in a sequential address order, such that the metadata code is written to a particular address, and the second process generates an acknowledgment of the first memory command to the first process on condition that reading the particular address returns the metadata code.

Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 depicts a collective operation in one embodiment.
FIG. 2 depicts a collective operation in another embodiment.
FIG. 3 depicts a collective operation in another embodiment.
FIG. 4 depicts a collective operation in another embodiment.
FIG. 5 depicts a collective operation in another embodiment.
FIG. 6 depicts aspects of an end-to-end reliability protocol in one embodiment.
FIG. 7 depicts additional aspects of an end-to-end reliability protocol in one embodiment.
FIG. 8 depicts an example of a communication write command exchanged between two ranks.
FIG. 9 depicts additional aspects of an end-to-end reliability protocol in one embodiment.
FIG. 10 depicts a parallel processing unit 1002 in accordance with one embodiment.
FIG. 11 depicts a general processing cluster 1100 in accordance with one embodiment.
FIG. 12 depicts a memory partition unit 1200 in accordance with one embodiment.
FIG. 13 depicts a streaming multiprocessor 1300 in accordance with one embodiment.
FIG. 14 depicts a processing system 1400 in accordance with one embodiment.
FIG. 15 depicts an exemplary processing system 1500 in accordance with another embodiment.
FIG. 16 depicts a networking device in accordance with one embodiment.
FIG. 17 depicts an exemplary server system in accordance with one embodiment.
FIG. 18 depicts an exemplary computer system in accordance with one embodiment.
FIG. 19 depicts an exemplary data center 1900 in accordance with an embodiment.

### DETAILED DESCRIPTION

Disclosed herein are networking protocols comprising an unreliable, unordered memory STORE (write) command that may be dropped and adaptively routed. This STORE command may be referred to herein as a "communication write command". A corresponding LOAD (read) command may be referred to herein as a "communication read command".

Communication write commands may not be acknowledged by the target memory devices of the communication write commands. Communication write commands may be utilized in different operating modes such as:
(1) a lossy mode in which network applications that can tolerate lost data may ignore dropped communication write commands; and
(2) a non-lossy mode in concert with an application-layer resilience protocol, in which a self-synchronizing utilization enables the application logic to detect dropped communication write commands and retransmit as needed.

The application layer may differ from lower layers of a networking protocol in its role and responsibilities within the network communication process. The application layer may implement higher-level aspects of a protocol in the network protocol stack, whereas lower layers implement details of data transmission that are not exposed at the application layer. Application layer tasks may be concerned with managing the aspects of data exchange unique to the application at hand, for example HTTP methods for web traffic and SMTP commands for email.

Lower layers of the protocol stack may implement protocol features common to applications on the network, such as segmentation and reassembly of messages (transport layer), routing and logical addressing (network layer), frame formatting and MAC addressing (data link layer), and transmission of raw bits over a physical medium (physical layer).

Examples of application layer protocols designed for specific applications include HTTP, FTP, SMTP, and DNS.

One type of application involves the training of a deep learning model using stochastic gradient descent. This type of application may tolerate small amounts of data loss. When packet loss events are rare, the application may implement a lossy data model wherein some number of weight updates, activations, or gradient contributions may be dropped, incomplete, or utilize stale values.

In this application, periodic synchronization between initiator and target processes may be implemented to determine that writes belonging to a single transaction have all been delivered, or that some of the writes dropped.

The mechanisms disclosed herein may be utilized by networks that are herein referred to as "memory fabrics". Among data networks generally, memory fabrics comprise unique features and constraints. One feature of memory fabrics is that they carry traffic consisting primarily of memory commands such as LOADs and STOREs. Another feature of memory fabrics is that data payloads may be relatively small compared to the traffic carried by networks that are not memory fabrics. This last feature often results in a constraint that packet header overhead on memory fabrics be small relative to other other types of networks.

Consequently, memory fabrics may not support full end-to-end reliability, dynamic routing, or packet reordering at lower networking levels. On some memory fabrics, only link-level retransmission is supported and traffic is statically routed to maintain ordering for same-address memory transactions. The protocols utilized with a memory fabric may lack a mechanism for returning the completion status of a LOAD or STORE transaction to the initiating process.

Disclosed herein are protocol mechanisms for use with memory fabrics that a enables a communication mode wherein STORE transactions may be unordered and unreliable. The disclosed protocols may implement self-synchronizing techniques (e.g. link layer protocol or counted writes) to enable a receiver process to detect packet loss and engage an application layer retransmission mechanism.

The disclosed techniques provide recovery from communication write commands that are silently dropped in the memory fabric and tolerate unordered communication write command transactions. Communication write commands are configured with a limited time-to-live in the memory fabric, after which time they are guaranteed to have either been delivered successfully or dropped. In one embodiment, the disclosed communication write command utilizes a packet format comprising a self-synchronizing semantic that combines a small amount (e.g., 8 bytes) of metadata ("flag") and data payload into a single write where the order in which data is written at the command target is guaranteed, with the flag portion of the packet being the last value written to memory. In another embodiment, a self-synchronizing mechanism is implemented by incrementing a counter in memory after the communication write command has been successfully carried out.

Herein, "metadata" or "metadata code" refers to an attribute of a data payload, e.g., flags or counters. The metadata/metadata code may for example be communicated along with the data it is associated with, in a data payload portion of a packet. Examples of metadata/metadata codes are flags and counter values.

The disclosed mechanisms may further comprise a protocol mechanism wherein data loss is determined at the application layer by inspecting self-synchronizing flags or counters associated with communication write commands. The application layer of a receiver may detect 'stale' writes by inspecting the self-synchronizing flags or counters, and may synchronize with initiators of communication write commands to determine the endpoint of a transaction. A time-to-live mechanism may be configured in the memory fabric to ensure that no pending communication writes remain in flight in the network after a configured time interval from their launch.

The disclosed mechanisms include an application-layer end-to-end retransmission scheme wherein individual communication write commands are tracked using a particular link layer packet forma, or groups of communication write commands are tracked at the target using counters.

In one embodiment, upon successfully receiving a communication write command transaction, the target transmits a communication write command acknowledgement to the initiator. Upon the expiration of a wait timer for the acknowledgement, the initiator retransmits the communication write command. Upon receiving an acknowledgement from the initiator, the sender transmits an acknowledgement of the transaction acknowledgement to the receiver to complete the transmission. Upon the expiration of a wait timer for the acknowledgement of the acknowledgement, the target retransmits the acknowledgement of the acknowledgement. Retransmitted acknowledgements are distinguished from prior acknowledgements via an updated flag value or a counter value.

The disclosed mechanisms may significantly improve resilience to failures in memory fabrics networks by enabling adaptive routing and application layer end-to-end reliability in response to failures. Communication write commands may be acknowledged in bulk at the application layer, reducing traffic and power consumption on the memory fabric.

The disclosed mechanisms may have particular utility with LOAD and STORE commands on memory fabrics. Conventional packet data networks may utilize an event queue or similar mechanism that enables the network to report events back to a packet initiator or packet target indicating that a packet timed out or was dropped or delayed, for example. No such mechanisms may be available for LOAD and STORE commands on a memory fabric. Some systems utilizing memory fabrics may require that the ordering sequence of multiple STORE commands be preserved, to maintain the integrity of the stored values. LOAD and STORE operations may be frequent but relatively small transactions, meaning the packet header size needs to be maintained at a low percentage of the payload size to preserve bandwidth. Therefore, the packets on a memory fabric may not utilize sequence numbers in the headers, further complicating the ability to guarantee the ordering of STORE operations. The packets of a LOAD or STORE operation may carry minimal or no resilience bits or connection state in the headers, again to maintain a small header size relative to the data payload. For example the packets in a memory fabric may comprise a 16 byte header, which is just large information to indicate a destination address and an operand identifying the packet as being a STORE operation.

Due to these constraints, in the event of packet loss or reordering in the memory fabric, it may not be possible for the target of a STORE transaction to recover the proper ordering of data writes to a same memory address.

In one aspect, an inter-process communication mechanism divides a total payload of a memory command among multiple packets, encoding a last-transmitted packet of the set of packets to include a metadata code in the total payload. The packets are communicated over a network from a first process to a second process and written to memory in a sequential address order, such that the metadata code is written to a particular address. The second process acknowledges the memory command to the first process on condition that reading the particular address returns the metadata code.

In another aspect, on condition that the acknowledgment of the memory command is not received at the first process within a configured time interval, the first process may transmit a second memory command to the second process.

In another aspect, the total payload may comprise an LL128 encoding (described below), and LL256 encoding, or similar.

In another aspect, the sequential order may be a sequentially increasing order.

In another aspect, the first process and the second process may implement at least part of a collective operation.

In another aspect, application layer logic of the second process may read the particular address and generate the acknowledgment of the first memory command to application layer logic of the first process.

In another aspect, the first process may execute on a first graphics processing unit and the second process executes on a second graphics processing unit.

In another aspect, the second memory command may include a total payload identical to the total payload of the first memory command, including a metadata code identical to the metadata code of the first memory command.

In another aspect, the particular address may be a highest address of the sequential order.

In another aspect, the application layer logic of the first process may generate an acknowledgment of the acknowledgment to the application layer logic of the second process.

In another aspect, the acknowledgment of the acknowledgment may be encoded in the total payload of a second memory command communicated from the first process to the second process.

Other technical features, including apparatuses, systems, and configurations of memory to implement the mechanisms disclosed herein may be readily apparent to one skilled in the art from the following figures, descriptions, and claims.

Collective operations are operations that gather, broadcast, or reduce values across multiple devices, i.e., ranks. Collective operations may be utilized efficiently to implement communication among multiple cooperating devices, e.g., data processors. Each device in a collective operation may be identified an index or 'rank'.

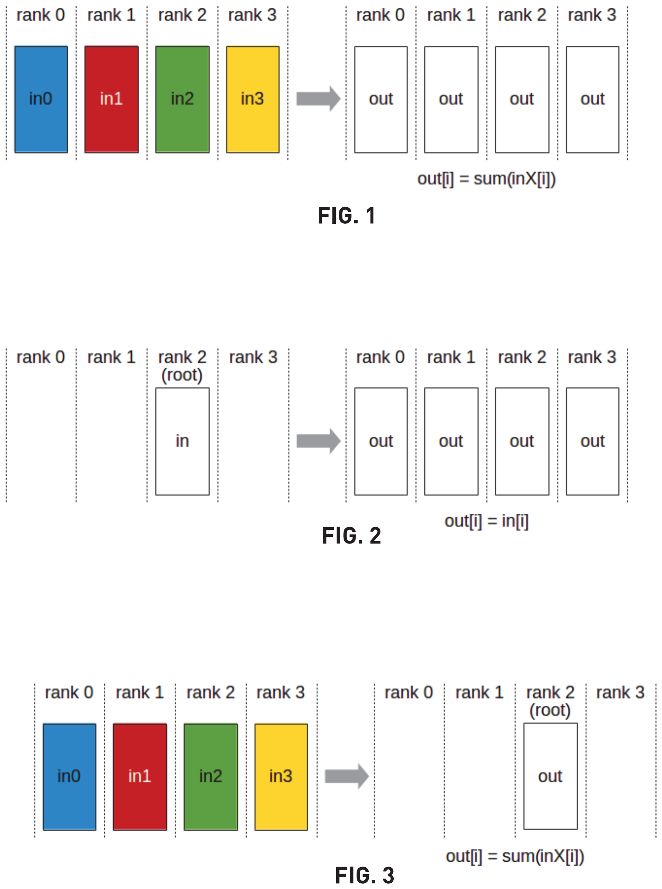

One example of a collective operation performs reductions (for example, sum, min, max) on a vector or other set of memory values across devices and stores the result in a receiving buffer of every rank. For example with a *sum* collective operation between *k* ranks, each rank may provide an input array in of N values, and each rank receives identical results in an output array out of N values, where out[i] = in0[i]+in1[i]+...+in(k-1)[i]. Herein this type of collective operation may be referred to as "AllReduce". See FIG. 1.

Another example of a collective operation may copy an N-element set of values from a root (source) rank to the other ranks. Herein this type of collective operation may be referred to as "Broadcast". See FIG. 2.

Yet another example of a collective operation may operate similarly to the one depicted in FIG. 1, and store the result only in the receiving buffer of a specified (i.e., root) rank. Herein this type of collective operation may be referred to as "Reduce". See FIG. 3.

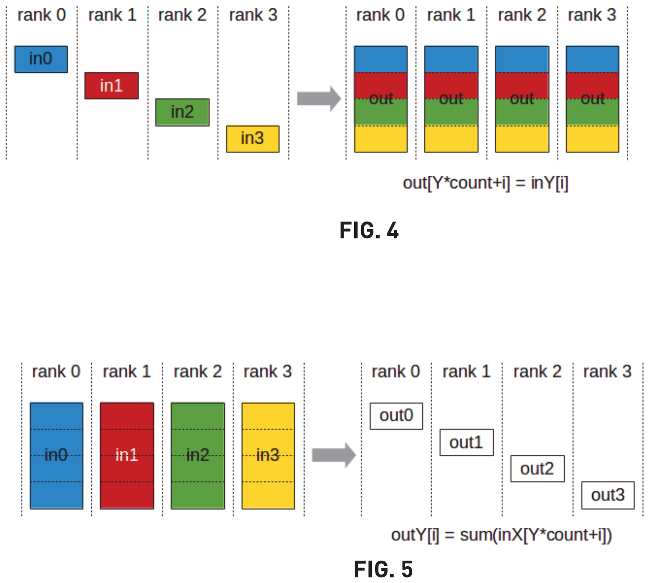

Yet another example of a collective operation gathers N values from k ranks into an output buffer of size k*N, and distributes that result to all ranks. The output may be ordered by the rank index. Herein this type of collective operation may be referred to as "AllGather". See FIG. 4.

Yet another example of a collective operation performs the same operation as Reduce, except that the result is scattered in equal-sized blocks between ranks, each rank getting a chunk of data based on its rank index. The output may be ordered by the rank index. Herein this type of collective operation may be referred to as "ReduceScatter". See FIG. 5.

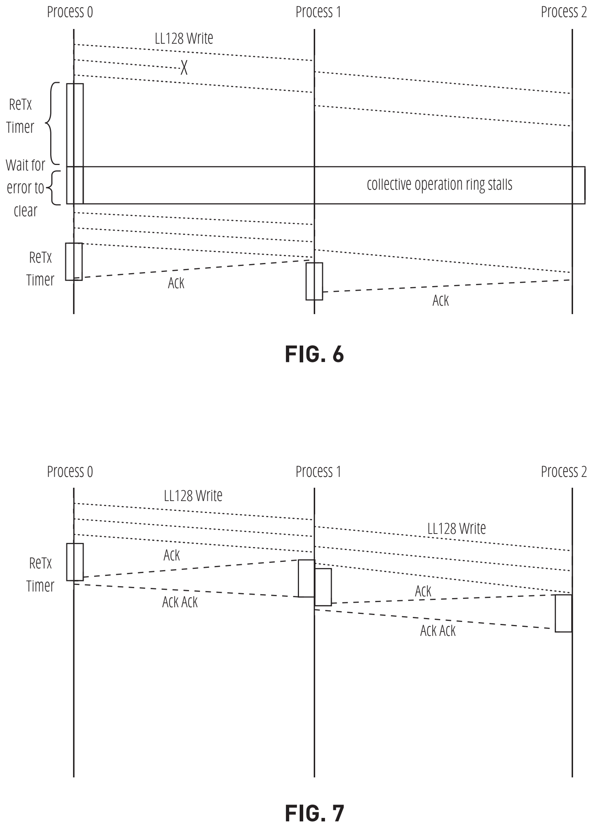

FIG. 6 depicts an example of an end-to-end reliability protocol utilized with collective operations in one embodiment. The collective operation involves the communication write command transaction from Process 0 to Process 1 over a memory fabric. The transaction comprises multiple packets each indicated by a dotted line. One of packets is lost in the memory fabric (indicated by the superimposed "X"). Process 0 and Process 1 may for example be multi-threaded kernel processes executing on different graphics processing units (ranks).

The depicted collective operation utilizes a virtual ring topology among processes of the different ranks. A multi-packet communication write command transaction is sent from Process 0 to Process 1. The number of packets in the transaction, and hence the total data payload size, may be configured (e.g., at the application layer) as larger or smaller depending on the amount of bandwidth to dedicate to acknowledgements, which in turn depends on how often transmission failures are to be expected. Once the configured number of packets are inflight, Process 0 starts a retransmit timer. The retransmit timer determines how long Process 0 waits for Process 1 to acknowledge receipt of the communication write command.

If the retransmit timer expires, Process 0 may monitor the status of the memory fabric and wait for the memory fabric to enter a healthy (e.g., non-congested or non-link-failed state). Alternatively Process 0 may simply retransmit the entire communication write command without determining the state of the memory fabric.

In the depicted example, Process 0 detects that the retransmit timer expired and retransmits the entire communication write command. The number of packets transmitted in a communication write command, before waiting for an acknowledgement, may be configured (e.g., at the application level) to minimize retransmission overhead based on the expected frequency of packet drops, time required for retransmission, and bandwidth overhead. After retransmission, Process 0 receives an acknowledgement from Process 1 that the communication write command was successfully received.

In the example of FIG. 6, the data payloads of the communication write command packets are encoded as 120B (Bytes) of application data and 8B of metadata/'flags' (herein, an LL128 format). Other payload formats that may be used that utilize different amounts and ratios of data and metadata, such as LL256 (248B of data, 8B of metadata/flags).

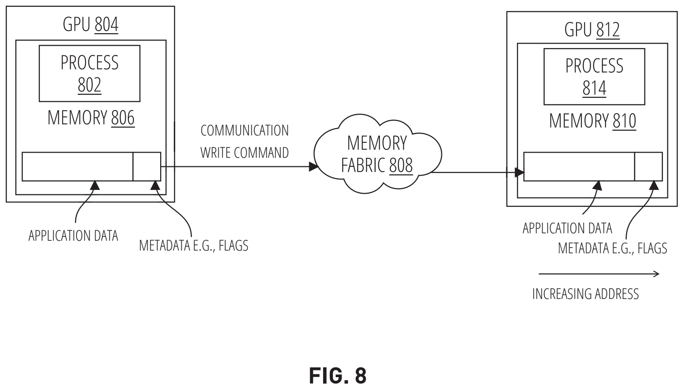

Referring to FIG. 8, the payloads of communication write command packets (including application data and flags) from an application process 802 of an initiator device 804 (e.g., a graphics processing unit) are set from the memory 806 of the initiator device 804 and communicated over a memory fabric 808 and written into memory 810 of the target device 812 (e.g., a graphics processing unit) using 8B single-copy atomic writes in an order of increasing memory address, with the flags being the last bits of the payload to be written. This ensures that by the time the flags are written into the target memory 810, all of the application data in the communication write command payload is written into and visible in the target memory 810. A process 814 of the target device 812 may for example poll the address where the flags are to be written (initialized to some known preset value that won't be used for flags) in the memory 810 and upon detecting the flags there, determine that reception of the application data in the communication write command from the initiator device 804 was successful.

The various processes in the collective operation may utilize a same algorithm for generating flag values. For example, Process 0 may generate a first flag value for a first communication write command and Process 1 may utilize the same algorithm to generate a flag value to compare with the value received at the expected address for the flag value communicated in the first communication write command, and so on for subsequent communication write commands.

The target process 814 does not send an acknowledgment of the communication write command until the flags appear at the expected address in the memory 810. The target process 814 also has no responsibility to communicate to the initiator process 802 any indication of which packets were not received.

The mechanism depicted in FIG. 6 is 'self-synchronizing' in the sense that the target process 814 of a communication write command can determine whether or not the application data payload was successfully stored in its memory 810 by checking the flags transmitted along with the application data in the payload, without involving the initiator process 802.

FIG. 6 further depicts how the forwarding of data between processes in a collective operation may be impacted by lost or delayed packets. In the depicted example, Process 1 has received packet 2 from Process 0, but it has received packets 1 and 3. Process 1 forwards packets 2 and 3 but not packet 2 along to Process 2, extending the stall through the computational ring. A broadcast or reduction collective operation may exhibit this behavior, for example.

The initiator process 802 retransmits the identical communication write command, with the same flag settings in the payload, upon expiration of the retransmit timer (or after the memory fabric condition that caused the timeout is cleared). The retransmitted communication write command is idempotent with the original one that timed out. Idempotency ensures that the write operation result in setting the memory location to a specific state without being affected by subsequent identical operations. Idempotency ensures that multiple identical write requests result in the same memory state, thereby preventing data corruption and enhancing fault tolerance in systems where write operations may be repeated due to retries or redundancy mechanisms.

Packets may be delayed in the network and may remain pending at the time of a retransmission. These duplicate, delayed writes may be referred to as ghost writes. Ghost writes are problematic when they cause a memory location to be overwritten with a value that has been superseded.

An end-to-end reliability protocol that utilizes communication write commands may be resilient to ghost writes. Being idempotent, the payloads (including flags) carried by the communication write commands don't change when a communication write command is retransmitted. For systems comprising memory models that are sensitive to ghost writes, the initiator may wait for the memory fabric's configured time-to-live interval for a dropped or delayed transmission to expire before retransmitting, ensuring that no ghosts or ghost writes for the retransmission remain in the network.

Utilizing counted writes, the transmitted payload need not include flags, which improves the bandwidth of the memory fabric. However, a counter is not idempotent to retransmissions. A number of mechanisms may be implemented to address this problem. When retransmitting writes due to a timeout condition, the initiator may synchronize with the target to reset the target's received write command counter, may switch to a backup counter with a preset initial count, or may utilize a combination of these approaches. In one embodiment the target establishes one or more counters to track received write commands, and performs all management of the counters (incrementing, rotating among backup counters used for retransmission, and so on).

FIG. 7 depicts an example of additional aspects of an end-to-end reliability protocol utilized with collective operations in one embodiment. An acknowledgement of a communication write command is communicated from the target back to the initiator. The target initiates a retransmission timer upon returning an acknowledgment (ACK) of the communication write command to the initiator. The initiator responds to the ACK with an acknowledgment of the acknowledgment (ACK ACK). The ACK is retransmitted from the target to the initiator if the ACK ACK is not received within the timeout interval (e.g., which may be configured to be at least twice the network's time-to-live setting). Time-to-live (TTL) is a configured setting for the period of time that a packet may exist undelivered in a network before being discarded.

The retransmitted ACK may have a value that differs from that of prior ACKs to avoid problems with duplicated packets, and so that the target may determine that the ACK ACK for the write command should also be retransmitted. In a network configured with a finite number of permitted ACK transmissions and a timeout value, both the initiator and the target may determine when the ACK ACK retransmission window has closed.

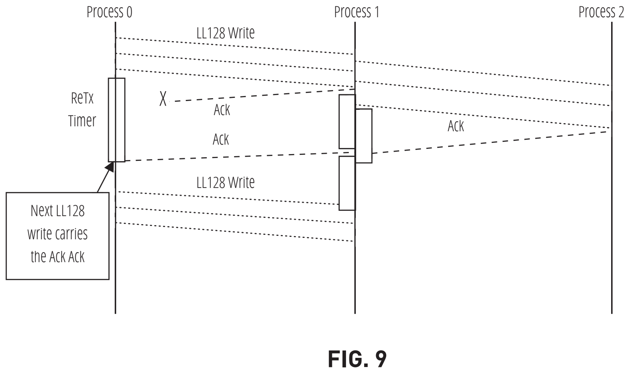

Large data transmissions may be segmented into separate communication write command transactions to limit an amount of data to retransmit in the event of dropped writes. In such large data exchanges between processes, subsequent writes may implicitly convey an ACK ACK of the ACKs for previous ones, as depicted in the embodiment of FIG. 9.

Protocols supporting unreliable LOAD commands may be implemented in a memory fabric utilizing the mechanisms disclosed herein, with the the direction of data transfer being from target back to initiator. Payloads for responses to unreliable load commands may encoded at the target device in a format such as LL128. Upon receiving the payload packets from the source, the initiator may inspect the LL128 flags to determine if the LOAD was performed successfully. The initiator may synchronize with the target by communicating an acknowledgement to the target when the data transfer is successfully complete.

The mechanisms disclosed herein may be implemented in computing devices utilizing one or more graphic processing unit (GPU) and/or general purpose data processor (e.g., a 'central processing unit or CPU). Exemplary architectures will now be described that may be configured with the mechanisms disclosed herein.

The following description may use certain acronyms and abbreviations as follows:
- "DPC" refers to a "data processing cluster";
- "GPC" refers to a "general processing cluster";
- "I/O" refers to a "input/output";
- "L1 cache" refers to "level one cache";
- "L2 cache" refers to "level two cache";
- "LSU" refers to a "load/store unit";
- "MMU" refers to a "memory management unit";
- "MPC" refers to an "M-pipe controller";
- "PPU" refers to a "parallel processing unit";
- "PROP" refers to a "pre-raster operations unit";
- "ROP" refers to a "raster operations";
- "SFU" refers to a "special function unit";
- "SM" refers to a "streaming multiprocessor";
- "Viewport SCC" refers to "viewport scale, cull, and clip";
- "WDX" refers to a "work distribution crossbar"; and
- "XBar" refers to a "crossbar".

### Parallel Processing Unit

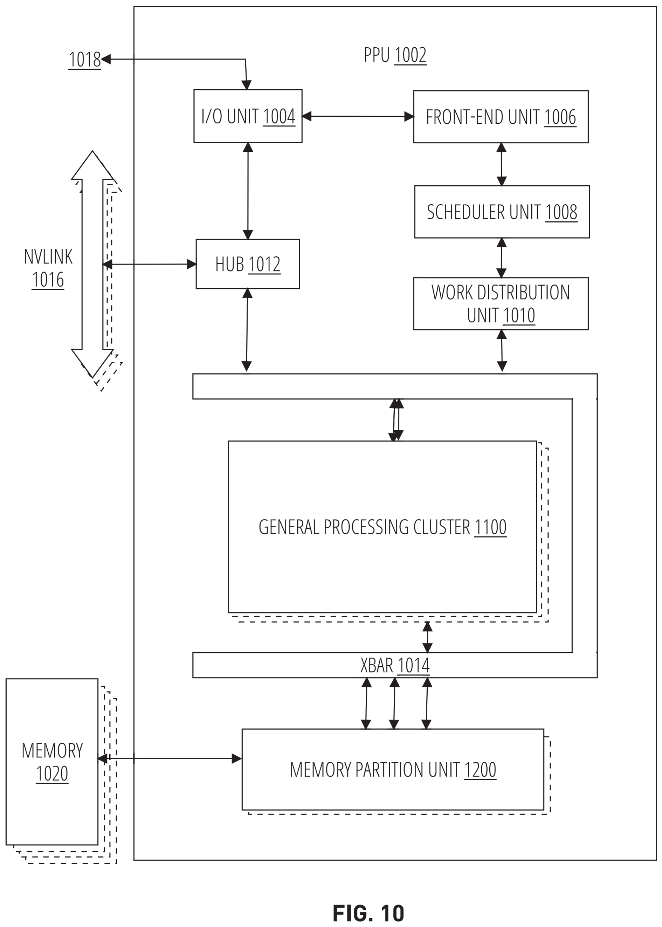

FIG. 10 depicts a parallel processing unit 1002, in accordance with an embodiment. In an embodiment, the parallel processing unit 1002 is a multi-threaded processor that is implemented on one or more integrated circuit devices. The parallel processing unit 1002 is a latency hiding architecture designed to process many threads in parallel. A thread (e.g., a thread of execution) is an instantiation of a set of instructions configured to be executed by the parallel processing unit 1002. In an embodiment, the parallel processing unit 1002 is a graphics processing unit (GPU) configured to implement a graphics rendering pipeline for processing three-dimensional (3D) graphics data in order to generate two-dimensional (2D) image data for display on a display device such as a liquid crystal display (LCD) device. In other embodiments, the parallel processing unit 1002 may be utilized for performing general-purpose computations. While one exemplary parallel processor is provided herein for illustrative purposes, it should be strongly noted that such processor is set forth for illustrative purposes only, and that any processor may be employed to supplement and/or substitute for the same.

One or more parallel processing unit 1002 modules may be configured to accelerate thousands of High Performance Computing (HPC), data center, and machine learning applications. The parallel processing unit 1002 may be configured to accelerate numerous deep learning systems and applications including autonomous vehicle platforms, deep learning, high-accuracy speech, image, and text recognition systems, intelligent video analytics, molecular simulations, drug discovery, disease diagnosis, weather forecasting, big data analytics, astronomy, molecular dynamics simulation, financial modeling, robotics, factory automation, real-time language translation, online search optimizations, and personalized user recommendations, and the like.

As shown in FIG. 10, the parallel processing unit 1002 includes an I/O unit 1004, a front-end unit 1006, a scheduler unit 1008, a work distribution unit 1010, a hub 1012, a crossbar 1014, one or more general processing cluster 1100 modules, and one or more memory partition unit 1200 modules. The parallel processing unit 1002 may be connected to a host processor or other parallel processing unit 1002 modules via one or more high-speed NVLink 1016 interconnects. The parallel processing unit 1002 may be connected to a host processor or other peripheral devices via an interconnect 1018. The parallel processing unit 1002 may also be connected to a local memory comprising a number of memory 1020 devices. In an embodiment, the local memory may comprise a number of dynamic random access memory (DRAM) devices. The DRAM devices may be configured as a high-bandwidth memory (HBM) subsystem, with multiple DRAM dies stacked within each device. The memory 1020 may comprise logic to configure the parallel processing unit 1002 to carry out aspects of the techniques disclosed herein.

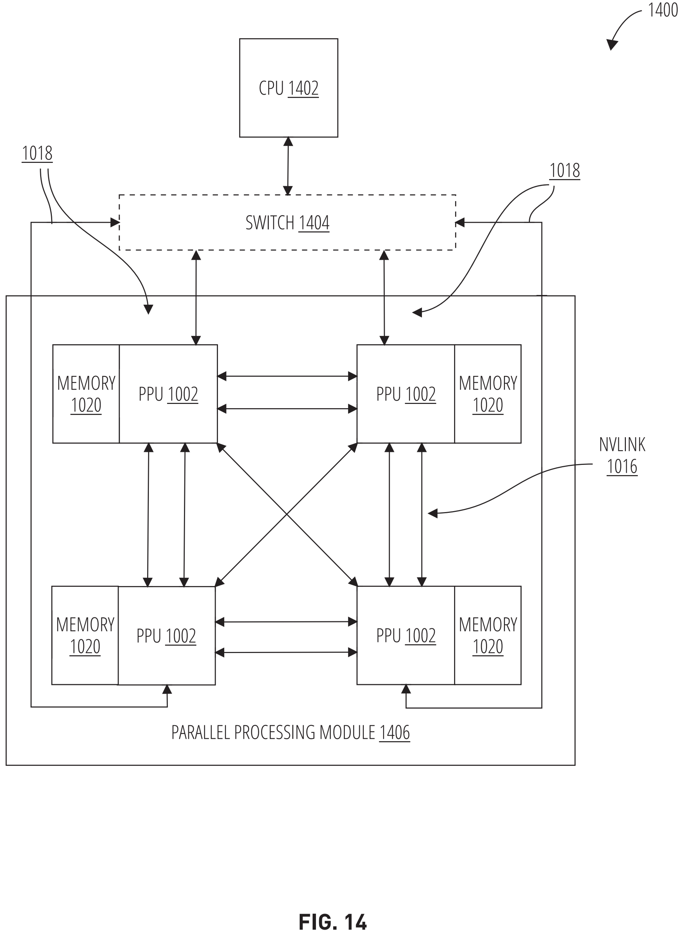

The NVLink 1016 interconnect enables systems to scale and include one or more parallel processing unit 1002 modules combined with one or more CPUs, supports cache coherence between the parallel processing unit 1002 modules and CPUs, and CPU mastering. Data and/or commands may be transmitted by the NVLink 1016 through the hub 1012 to/from other units of the parallel processing unit 1002 such as one or more copy engines, a video encoder, a video decoder, a power management unit, etc. (not explicitly shown). The NVLink 1016 is described in more detail in conjunction with FIG. 14.

The I/O unit 1004 is configured to transmit and receive communications (e.g., commands, data, etc.) from a host processor (not shown) over the interconnect 1018. The I/O unit 1004 may communicate with the host processor directly via the interconnect 1018 or through one or more intermediate devices such as a memory bridge. In an embodiment, the I/O unit 1004 may communicate with one or more other processors, such as one or more parallel processing unit 1002 modules via the interconnect 1018. In an embodiment, the I/O unit 1004 implements a Peripheral Component Interconnect Express (PCIe) interface for communications over a PCIe bus and the interconnect 1018 is a PCIe bus. In alternative embodiments, the I/O unit 1004 may implement other types of well-known interfaces for communicating with external devices.

The I/O unit 1004 decodes packets received via the interconnect 1018. In an embodiment, the packets represent commands configured to cause the parallel processing unit 1002 to perform various operations. The I/O unit 1004 transmits the decoded commands to various other units of the parallel processing unit 1002 as the commands may specify. For example, some commands may be transmitted to the front-end unit 1006. Other commands may be transmitted to the hub 1012 or other units of the parallel processing unit 1002 such as one or more copy engines, a video encoder, a video decoder, a power management unit, etc. (not explicitly shown). In other words, the I/O unit 1004 is configured to route communications between and among the various logical units of the parallel processing unit 1002.

In an embodiment, a program executed by the host processor encodes a command stream in a buffer that provides workloads to the parallel processing unit 1002 for processing. A workload may comprise several instructions and data to be processed by those instructions. The buffer is a region in a memory that is accessible (e.g., read/write) by both the host processor and the parallel processing unit 1002. For example, the I/O unit 1004 may be configured to access the buffer in a system memory connected to the interconnect 1018 via memory requests transmitted over the interconnect 1018. In an embodiment, the host processor writes the command stream to the buffer and then transmits a pointer to the start of the command stream to the parallel processing unit 1002. The front-end unit 1006 receives pointers to one or more command streams. The front-end unit 1006 manages the one or more streams, reading commands from the streams and forwarding commands to the various units of the parallel processing unit 1002.

The front-end unit 1006 is coupled to a scheduler unit 1008 that configures the various general processing cluster 1100 modules to process tasks defined by the one or more streams. The scheduler unit 1008 is configured to track state information related to the various tasks managed by the scheduler unit 1008. The state may indicate which general processing cluster 1100 a task is assigned to, whether the task is active or inactive, a priority level associated with the task, and so forth. The scheduler unit 1008 manages the execution of a plurality of tasks on the one or more general processing cluster 1100 modules.

The scheduler unit 1008 is coupled to a work distribution unit 1010 that is configured to dispatch tasks for execution on the general processing cluster 1100 modules. The work distribution unit 1010 may track a number of scheduled tasks received from the scheduler unit 1008. In an embodiment, the work distribution unit 1010 manages a pending task pool and an active task pool for each of the general processing cluster 1100 modules. The pending task pool may comprise a number of slots (e.g., 32 slots) that contain tasks assigned to be processed by a particular general processing cluster 1100. The active task pool may comprise a number of slots (e.g., 4 slots) for tasks that are actively being processed by the general processing cluster 1100 modules. As a general processing cluster 1100 finishes the execution of a task, that task is evicted from the active task pool for the general processing cluster 1100 and one of the other tasks from the pending task pool is selected and scheduled for execution on the general processing cluster 1100. If an active task has been idle on the general processing cluster 1100, such as while waiting for a data dependency to be resolved, then the active task may be evicted from the general processing cluster 1100 and returned to the pending task pool while another task in the pending task pool is selected and scheduled for execution on the general processing cluster 1100.

The work distribution unit 1010 communicates with the one or more general processing cluster 1100 modules via crossbar 1014. The crossbar 1014 is an interconnect network that couples many of the units of the parallel processing unit 1002 to other units of the parallel processing unit 1002. For example, the crossbar 1014 may be configured to couple the work distribution unit 1010 to a particular general processing cluster 1100. Although not shown explicitly, one or more other units of the parallel processing unit 1002 may also be connected to the crossbar 1014 via the hub 1012.

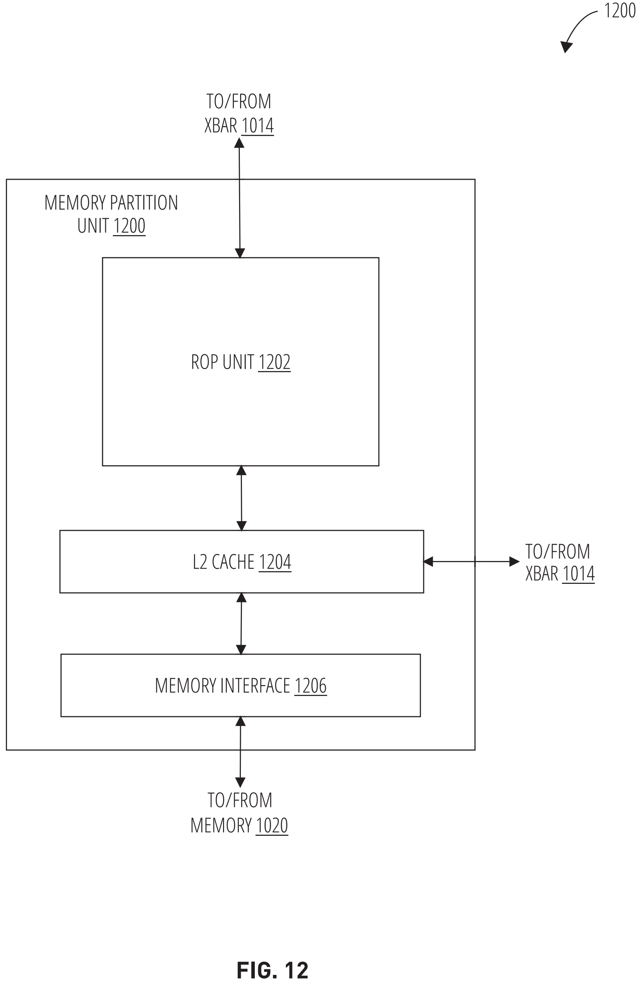

The tasks are managed by the scheduler unit 1008 and dispatched to a general processing cluster 1100 by the work distribution unit 1010. The general processing cluster 1100 is configured to process the task and generate results. The results may be consumed by other tasks within the general processing cluster 1100, routed to a different general processing cluster 1100 via the crossbar 1014, or stored in the memory 1020. The results can be written to the memory 1020 via the memory partition unit 1200 modules, which implement a memory interface for reading and writing data to/from the memory 1020. The results can be transmitted to another parallel processing unit 1002 or CPU via the NVLink 1016. In an embodiment, the parallel processing unit 1002 includes a number U of memory partition unit 1200 modules that is equal to the number of separate and distinct memory 1020 devices coupled to the parallel processing unit 1002. A memory partition unit 1200 will be described in more detail below in conjunction with FIG. 12.

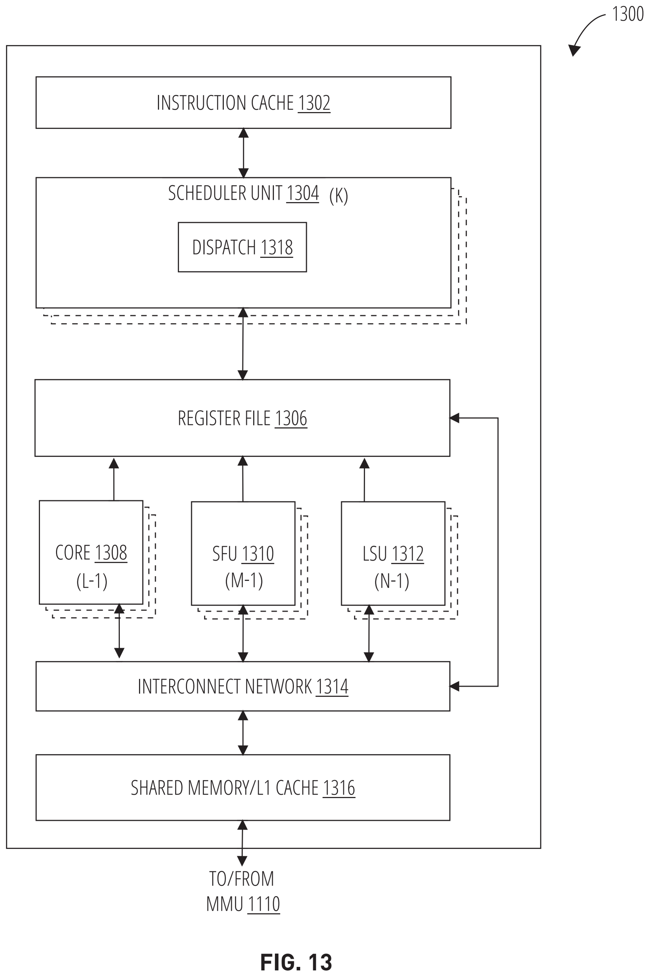

In an embodiment, a host processor executes a driver kernel that implements an application programming interface (API) that enables one or more applications executing on the host processor to schedule operations for execution on the parallel processing unit 1002. In an embodiment, multiple compute applications are simultaneously executed by the parallel processing unit 1002 and the parallel processing unit 1002 provides isolation, quality of service (QoS), and independent address spaces for the multiple compute applications. An application may generate instructions (e.g., API calls) that cause the driver kernel to generate one or more tasks for execution by the parallel processing unit 1002. The driver kernel outputs tasks to one or more streams being processed by the parallel processing unit 1002. Each task may comprise one or more groups of related threads, referred to herein as a warp. In an embodiment, a warp comprises 32 related threads that may be executed in parallel. Cooperating threads may refer to a plurality of threads including instructions to perform the task and that may exchange data through shared memory. Threads and cooperating threads are described in more detail in conjunction with FIG. 13.

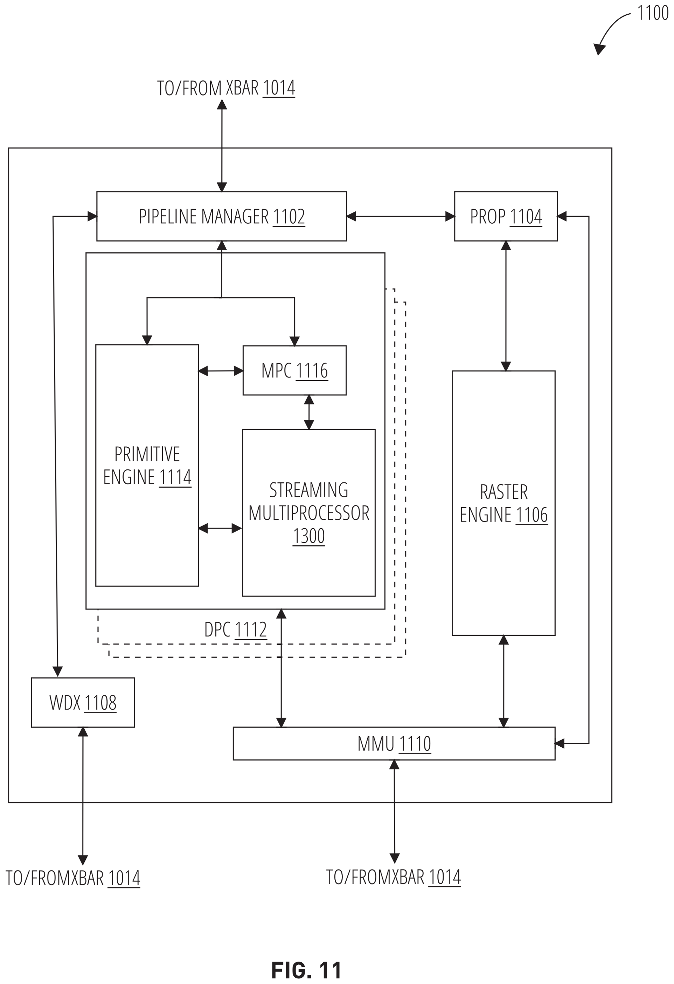

FIG. 11 depicts a general processing cluster 1100 of the parallel processing unit 1002 of FIG. 10, in accordance with an embodiment. As shown in FIG. 11, each general processing cluster 1100 includes a number of hardware units for processing tasks. In an embodiment, each general processing cluster 1100 includes a pipeline manager 1102, a pre-raster operations unit 1104, a raster engine 1106, a work distribution crossbar 1108, a memory management unit 1110, and one or more data processing cluster 1112. It will be appreciated that the general processing cluster 1100 of FIG. 11 may include other hardware units in lieu of or in addition to the units shown in FIG. 11.

In an embodiment, the operation of the general processing cluster 1100 is controlled by the pipeline manager 1102. The pipeline manager 1102 manages the configuration of the one or more data processing cluster 1112 modules for processing tasks allocated to the general processing cluster 1100. In an embodiment, the pipeline manager 1102 may configure at least one of the one or more data processing cluster 1112 modules to implement at least a portion of a graphics rendering pipeline. For example, a data processing cluster 1112 may be configured to execute a vertex shader program on the programmable streaming multiprocessor 1300. The pipeline manager 1102 may also be configured to route packets received from the work distribution unit 1010 to the appropriate logical units within the general processing cluster 1100. For example, some packets may be routed to fixed function hardware units in the pre-raster operations unit 1104 and/or raster engine 1106 while other packets may be routed to the data processing cluster 1112 modules for processing by the primitive engine 1114 or the streaming multiprocessor 1300. In an embodiment, the pipeline manager 1102 may configure at least one of the one or more data processing cluster 1112 modules to implement a neural network model and/or a computing pipeline.

The pre-raster operations unit 1104 is configured to route data generated by the raster engine 1106 and the data processing cluster 1112 modules to a Raster Operations (ROP) unit, described in more detail in conjunction with FIG. 12. The pre-raster operations unit 1104 may also be configured to perform optimizations for color blending, organize pixel data, perform address translations, and the like.

The raster engine 1106 includes a number of fixed function hardware units configured to perform various raster operations. In an embodiment, the raster engine 1106 includes a setup engine, a coarse raster engine, a culling engine, a clipping engine, a fine raster engine, and a tile coalescing engine. The setup engine receives transformed vertices and generates plane equations associated with the geometric primitive defined by the vertices. The plane equations are transmitted to the coarse raster engine to generate coverage information (e.g., an x, y coverage mask for a tile) for the primitive. The output of the coarse raster engine is transmitted to the culling engine where fragments associated with the primitive that fail a z-test are culled, and transmitted to a clipping engine where fragments lying outside a viewing frustum are clipped. Those fragments that survive clipping and culling may be passed to the fine raster engine to generate attributes for the pixel fragments based on the plane equations generated by the setup engine. The output of the raster engine 1106 comprises fragments to be processed, for example, by a fragment shader implemented within a data processing cluster 1112.

Each data processing cluster 1112 included in the general processing cluster 1100 includes an M-pipe controller 1116, a primitive engine 1114, and one or more streaming multiprocessor 1300 modules. The M-pipe controller 1116 controls the operation of the data processing cluster 1112, routing packets received from the pipeline manager 1102 to the appropriate units in the data processing cluster 1112. For example, packets associated with a vertex may be routed to the primitive engine 1114, which is configured to fetch vertex attributes associated with the vertex from the memory 1020. In contrast, packets associated with a shader program may be transmitted to the streaming multiprocessor 1300.

The streaming multiprocessor 1300 comprises a programmable streaming processor that is configured to process tasks represented by a number of threads. Each streaming multiprocessor 1300 is multi-threaded and configured to execute a plurality of threads (e.g., 32 threads) from a particular group of threads concurrently. In an embodiment, the streaming multiprocessor 1300 implements a Single-Instruction, Multiple-Data (SIMD) architecture where each thread in a group of threads (e.g., a warp) is configured to process a different set of data based on the same set of instructions. All threads in the group of threads execute the same instructions. In another embodiment, the streaming multiprocessor 1300 implements a Single-Instruction, Multiple Thread (SIMT) architecture where each thread in a group of threads is configured to process a different set of data based on the same set of instructions, but where individual threads in the group of threads are allowed to diverge during execution. In an embodiment, a program counter, call stack, and execution state is maintained for each warp, enabling concurrency between warps and serial execution within warps when threads within the warp diverge. In another embodiment, a program counter, call stack, and execution state is maintained for each individual thread, enabling equal concurrency between all threads, within and between warps. When execution state is maintained for each individual thread, threads executing the same instructions may be converged and executed in parallel for maximum efficiency. The streaming multiprocessor 1300 will be described in more detail below in conjunction with FIG. 13.

The memory management unit 1110 provides an interface between the general processing cluster 1100 and the memory partition unit 1200. The memory management unit 1110 may provide translation of virtual addresses into physical addresses, memory protection, and arbitration of memory requests. In an embodiment, the memory management unit 1110 provides one or more translation lookaside buffers (TLBs) for performing translation of virtual addresses into physical addresses in the memory 1020.

FIG. 12 depicts a memory partition unit 1200 of the parallel processing unit 1002 of FIG. 10, in accordance with an embodiment. As shown in FIG. 12, the memory partition unit 1200 includes a raster operations unit 1202, a level two cache 1204, and a memory interface 1206. The memory interface 1206 is coupled to the memory 1020. Memory interface 1206 may implement 32, 64, 128, 1024-bit data buses, or the like, for high-speed data transfer. In an embodiment, the parallel processing unit 1002 incorporates U memory interface 1206 modules, one memory interface 1206 per pair of memory partition unit 1200 modules, where each pair of memory partition unit 1200 modules is connected to a corresponding memory 1020 device. For example, parallel processing unit 1002 may be connected to up to Y memory 1020 devices, such as high bandwidth memory stacks or graphics double-data-rate, version 5, synchronous dynamic random access memory, or other types of persistent storage.

In an embodiment, the memory interface 1206 implements an HBM2 memory interface and Y equals half U. In an embodiment, the HBM2 memory stacks are located on the same physical package as the parallel processing unit 1002, providing substantial power and area savings compared with conventional GDDR5 SDRAM systems. In an embodiment, each HBM2 stack includes four memory dies and Y equals 4, with HBM2 stack including two 128-bit channels per die for a total of 8 channels and a data bus width of 1024 bits.

In an embodiment, the memory 1020 supports Single-Error Correcting Double-Error Detecting (SECDED) Error Correction Code (ECC) to protect data. ECC provides higher reliability for compute applications that are sensitive to data corruption. Reliability is especially important in large-scale cluster computing environments where parallel processing unit 1002 modules process very large datasets and/or run applications for extended periods.

In an embodiment, the parallel processing unit 1002 implements a multi-level memory hierarchy. In an embodiment, the memory partition unit 1200 supports a unified memory to provide a single unified virtual address space for CPU and parallel processing unit 1002 memory, enabling data sharing between virtual memory systems. In an embodiment the frequency of accesses by a parallel processing unit 1002 to memory located on other processors is traced to ensure that memory pages are moved to the physical memory of the parallel processing unit 1002 that is accessing the pages more frequently. In an embodiment, the NVLink 1016 supports address translation services allowing the parallel processing unit 1002 to directly access a CPU's page tables and providing full access to CPU memory by the parallel processing unit 1002.

In an embodiment, copy engines transfer data between multiple parallel processing unit 1002 modules or between parallel processing unit 1002 modules and CPUs. The copy engines can generate page faults for addresses that are not mapped into the page tables. The memory partition unit 1200 can then service the page faults, mapping the addresses into the page table, after which the copy engine can perform the transfer. In a conventional system, memory is pinned (e.g., non-pageable) for multiple copy engine operations between multiple processors, substantially reducing the available memory. With hardware page faulting, addresses can be passed to the copy engines without worrying if the memory pages are resident, and the copy process is transparent.

Data from the memory 1020 or other system memory may be fetched by the memory partition unit 1200 and stored in the level two cache 1204, which is located on-chip and is shared between the various general processing cluster 1100 modules. As shown, each memory partition unit 1200 includes a portion of the level two cache 1204 associated with a corresponding memory 1020 device. Lower level caches may then be implemented in various units within the general processing cluster 1100 modules. For example, each of the streaming multiprocessor 1300 modules may implement an L1 cache. The L1 cache is private memory that is dedicated to a particular streaming multiprocessor 1300. Data from the level two cache 1204 may be fetched and stored in each of the L1 caches for processing in the functional units of the streaming multiprocessor 1300 modules. The level two cache 1204 is coupled to the memory interface 1206 and the crossbar 1014.

The raster operations unit 1202 performs graphics raster operations related to pixel color, such as color compression, pixel blending, and the like. The raster operations unit 1202 also implements depth testing in conjunction with the raster engine 1106, receiving a depth for a sample location associated with a pixel fragment from the culling engine of the raster engine 1106. The depth is tested against a corresponding depth in a depth buffer for a sample location associated with the fragment. If the fragment passes the depth test for the sample location, then the raster operations unit 1202 updates the depth buffer and transmits a result of the depth test to the raster engine 1106. It will be appreciated that the number of partition memory partition unit 1200 modules may be different than the number of general processing cluster 1100 modules and, therefore, each raster operations unit 1202 may be coupled to each of the general processing cluster 1100 modules. The raster operations unit 1202 tracks packets received from the different general processing cluster 1100 modules and determines which general processing cluster 1100 that a result generated by the raster operations unit 1202 is routed to through the crossbar 1014. Although the raster operations unit 1202 is included within the memory partition unit 1200 in FIG. 12, in other embodiment, the raster operations unit 1202 may be outside of the memory partition unit 1200. For example, the raster operations unit 1202 may reside in the general processing cluster 1100 or another unit.

FIG. 13 illustrates the streaming multiprocessor 1300 of FIG. 11, in accordance with an embodiment. As shown in FIG. 13, the streaming multiprocessor 1300 includes an instruction cache 1302, one or more scheduler unit 1304 modules (e.g., such as scheduler unit 1008), a register file 1306, one or more processing core 1308 modules, one or more special function unit 1310 modules, one or more load/store unit 1312 modules, an interconnect network 1314, and a shared memory/L1 cache 1316.

As described above, the work distribution unit 1010 dispatches tasks for execution on the general processing cluster 1100 modules of the parallel processing unit 1002. The tasks are allocated to a particular data processing cluster 1112 within a general processing cluster 1100 and, if the task is associated with a shader program, the task may be allocated to a streaming multiprocessor 1300. The scheduler unit 1008 receives the tasks from the work distribution unit 1010 and manages instruction scheduling for one or more thread blocks assigned to the streaming multiprocessor 1300. The scheduler unit 1304 schedules thread blocks for execution as warps of parallel threads, where each thread block is allocated at least one warp. In an embodiment, each warp executes 32 threads. The scheduler unit 1304 may manage a plurality of different thread blocks, allocating the warps to the different thread blocks and then dispatching instructions from the plurality of different cooperative groups to the various functional units (e.g., core 1308 modules, special function unit 1310 modules, and load/store unit 1312 modules) during each clock cycle.

Cooperative Groups is a programming model for organizing groups of communicating threads that allows developers to express the granularity at which threads are communicating, enabling the expression of richer, more efficient parallel decompositions. Cooperative launch APIs support synchronization amongst thread blocks for the execution of parallel algorithms. Conventional programming models provide a single, simple construct for synchronizing cooperating threads: a barrier across all threads of a thread block (e.g., the syncthreads( ) function). However, programmers would often like to define groups of threads at smaller than thread block granularities and synchronize within the defined groups to enable greater performance, design flexibility, and software reuse in the form of collective group-wide function interfaces.

Cooperative Groups enables programmers to define groups of threads explicitly at sub-block (e.g., as small as a single thread) and multi-block granularities, and to perform collective operations such as synchronization on the threads in a cooperative group. The programming model supports clean composition across software boundaries, so that libraries and utility functions can synchronize safely within their local context without having to make assumptions about convergence. Cooperative Groups primitives enable new patterns of cooperative parallelism, including producer-consumer parallelism, opportunistic parallelism, and global synchronization across an entire grid of thread blocks.

A dispatch 1318 unit is configured within the scheduler unit 1304 to transmit instructions to one or more of the functional units. In one embodiment, the scheduler unit 1304 includes two dispatch 1318 units that enable two different instructions from the same warp to be dispatched during each clock cycle. In alternative embodiments, each scheduler unit 1304 may include a single dispatch 1318 unit or additional dispatch 1318 units.

Each streaming multiprocessor 1300 includes a register file 1306 that provides a set of registers for the functional units of the streaming multiprocessor 1300. In an embodiment, the register file 1306 is divided between each of the functional units such that each functional unit is allocated a dedicated portion of the register file 1306. In another embodiment, the register file 1306 is divided between the different warps being executed by the streaming multiprocessor 1300. The register file 1306 provides temporary storage for operands connected to the data paths of the functional units.

Each streaming multiprocessor 1300 comprises L processing core 1308 modules. In an embodiment, the streaming multiprocessor 1300 includes a large number (e.g., 128, etc.) of distinct processing core 1308 modules. Each core 1308 may include a fully-pipelined, single-precision, double-precision, and/or mixed precision processing unit that includes a floating point arithmetic logic unit and an integer arithmetic logic unit. In an embodiment, the floating point arithmetic logic units implement the IEEE 754-2008 standard for floating point arithmetic. In an embodiment, the core 1308 modules include 64 single-precision (32-bit) floating point cores, 64 integer cores, 32 double-precision (64-bit) floating point cores, and 8 tensor cores.

Tensor cores configured to perform matrix operations, and, in an embodiment, one or more tensor cores are included in the core 1308 modules. In particular, the tensor cores are configured to perform deep learning matrix arithmetic, such as convolution operations for neural network training and inferencing. In an embodiment, each tensor core operates on a 4x4 matrix and performs a matrix multiply and accumulate operation D=A'B+C, where A, B, C, and D are 4x4 matrices.

In an embodiment, the matrix multiply inputs A and B are 16-bit floating point matrices, while the accumulation matrices C and D may be 16-bit floating point or 32-bit floating point matrices. Tensor Cores operate on 16-bit floating point input data with 32-bit floating point accumulation. The 16-bit floating point multiply requires 64 operations and results in a full precision product that is then accumulated using 32-bit floating point addition with the other intermediate products for a 4x4x4 matrix multiply. In practice, Tensor Cores are used to perform much larger two-dimensional or higher dimensional matrix operations, built up from these smaller elements. An API, such as CUDA 9 C++ API, exposes specialized matrix load, matrix multiply and accumulate, and matrix store operations to efficiently use Tensor Cores from a CUDA-C++ program. At the CUDA level, the warp-level interface assumes 16x16 size matrices spanning all 32 threads of the warp.

Each streaming multiprocessor 1300 also comprises M special function unit 1310 modules that perform special functions (e.g., attribute evaluation, reciprocal square root, and the like). In an embodiment, the special function unit 1310 modules may include a tree traversal unit configured to traverse a hierarchical tree data structure. In an embodiment, the special function unit 1310 modules may include texture unit configured to perform texture map filtering operations. In an embodiment, the texture units are configured to load texture maps (e.g., a 2D array of texels) from the memory 1020 and sample the texture maps to produce sampled texture values for use in shader programs executed by the streaming multiprocessor 1300. In an embodiment, the texture maps are stored in the shared memory/L1 cache 1316. The texture units implement texture operations such as filtering operations using mip-maps (e.g., texture maps of varying levels of detail). In an embodiment, each streaming multiprocessor 1300 includes two texture units.

Each streaming multiprocessor 1300 also comprises N load/store unit 1312 modules that implement load and store operations between the shared memory/L1 cache 1316 and the register file 1306. Each streaming multiprocessor 1300 includes an interconnect network 1314 that connects each of the functional units to the register file 1306 and the load/store unit 1312 to the register file 1306 and shared memory/L1 cache 1316. In an embodiment, the interconnect network 1314 is a crossbar that can be configured to connect any of the functional units to any of the registers in the register file 1306 and connect the load/store unit 1312 modules to the register file 1306 and memory locations in shared memory/L1 cache 1316.

The shared memory/L1 cache 1316 is an array of on-chip memory that allows for data storage and communication between the streaming multiprocessor 1300 and the primitive engine 1114 and between threads in the streaming multiprocessor 1300. In an embodiment, the shared memory/L1 cache 1316 comprises 128KB of storage capacity and is in the path from the streaming multiprocessor 1300 to the memory partition unit 1200. The shared memory/L1 cache 1316 can be used to cache reads and writes. One or more of the shared memory/L1 cache 1316, level two cache 1204, and memory 1020are backing stores.

Combining data cache and shared memory functionality into a single memory block provides the best overall performance for both types of memory accesses. The capacity is usable as a cache by programs that do not use shared memory. For example, if shared memory is configured to use half of the capacity, texture and load/store operations can use the remaining capacity. Integration within the shared memory/L1 cache 1316 enables the shared memory/L1 cache 1316 to function as a high-throughput conduit for streaming data while simultaneously providing high-bandwidth and low-latency access to frequently reused data.

When configured for general purpose parallel computation, a simpler configuration can be used compared with graphics processing. Specifically, the fixed function graphics processing units shown in FIG. 10, are bypassed, creating a much simpler programming model. In the general purpose parallel computation configuration, the work distribution unit 1010 assigns and distributes blocks of threads directly to the data processing cluster 1112 modules. The threads in a block execute the same program, using a unique thread ID in the calculation to ensure each thread generates unique results, using the streaming multiprocessor 1300 to execute the program and perform calculations, shared memory/L1 cache 1316 to communicate between threads, and the load/store unit 1312 to read and write global memory through the shared memory/L1 cache 1316 and the memory partition unit 1200. When configured for general purpose parallel computation, the streaming multiprocessor 1300 can also write commands that the scheduler unit 1008 can use to launch new work on the data processing cluster 1112 modules.

The parallel processing unit 1002 may be included in a desktop computer, a laptop computer, a tablet computer, servers, supercomputers, a smart-phone (e.g., a wireless, hand-held device), personal digital assistant (PDA), a digital camera, a vehicle, a head mounted display, a hand-held electronic device, and the like. In an embodiment, the parallel processing unit 1002 is embodied on a single semiconductor substrate. In another embodiment, the parallel processing unit 1002 is included in a system-on-a-chip (SoC) along with one or more other devices such as additional parallel processing unit 1002 modules, the memory 1020, a reduced instruction set computer (RISC) CPU, a memory management unit (MMU), a digital-to-analog converter (DAC), and the like.

In an embodiment, the parallel processing unit 1002 may be included on a graphics card that includes one or more memory devices. The graphics card may be configured to interface with a PCIe slot on a motherboard of a desktop computer. In yet another embodiment, the parallel processing unit 1002 may be an integrated graphics processing unit (iGPU) or parallel processor included in the chipset of the motherboard.

### Exemplary Computing System

Systems with multiple GPUs and CPUs are used in a variety of industries as developers expose and leverage more parallelism in applications such as artificial intelligence computing. High-performance GPU-accelerated systems with tens to many thousands of compute nodes are deployed in data centers, research facilities, and supercomputers to solve ever larger problems. As the number of processing devices within the high-performance systems increases, the communication and data transfer mechanisms need to scale to support the increased bandwidth.

FIG. 14 is a conceptual diagram of a processing system 1400 implemented using the parallel processing unit 1002 of FIG. 10, in accordance with an embodiment. The processing system 1400 includes a central processing unit 1402, an optional switch 1404, and multiple parallel processing unit 1002 modules each and respective memory 1020 modules. The NVLink 1016 provides high-speed communication links between each of the parallel processing unit 1002 modules. Although a particular number of NVLink 1016 and interconnect 1018 connections are illustrated in FIG. 14, the number of connections to each parallel processing unit 1002 and the central processing unit 1402 may vary. The disclosed mechanisms may be utilized for example between the parallel processing units 1002.

In some implementations a switch 1404 is utilized to interface between the interconnect 1018 and the central processing unit 1402. In other implementations the switch 1404 may not be utilized and the interconnect 1018 is utilized to more directly interface the central processing unit 1402 to the other processing units.

The parallel processing unit 1002 modules, memory 1020 modules, and NVLink 1016 connections may be situated on a single semiconductor platform to form a parallel processing module 1406. In an embodiment, the switch 1404 supports two or more protocols to interface between various different connections and/or links.

In another embodiment (not shown), the NVLink 1016 provides one or more high-speed communication links between each of the parallel processing unit modules (parallel processing unit 1002, parallel processing unit 1002, parallel processing unit 1002, and parallel processing unit 1002) and the central processing unit 1402 and the switch 1404 interfaces between the interconnect 1018 and each of the parallel processing unit modules. The parallel processing unit modules, memory 1020 modules, and interconnect 1018 may be situated on a single semiconductor platform to form a parallel processing module 1406. In yet another embodiment (not shown), the interconnect 1018 provides one or more communication links between each of the parallel processing unit modules and the central processing unit 1402 and the switch 1404 interfaces between each of the parallel processing unit modules using the NVLink 1016 to provide one or more high-speed communication links between the parallel processing unit modules. In another embodiment (not shown), the NVLink 1016 provides one or more high-speed communication links between the parallel processing unit modules and the central processing unit 1402 through the switch 1404. In yet another embodiment (not shown), the interconnect 1018 provides one or more communication links between each of the parallel processing unit modules directly. One or more of the NVLink 1016 high-speed communication links may be implemented as a physical NVLink interconnect or either an on-chip or on-die interconnect using the same protocol as the NVLink 1016.

In the context of the present description, a single semiconductor platform may refer to a sole unitary semiconductor-based integrated circuit fabricated on a die or chip. It should be noted that the term single semiconductor platform may also refer to multi-chip modules with increased connectivity which simulate on-chip operation and make substantial improvements over utilizing a conventional bus implementation. Of course, the various circuits or devices may also be situated separately or in various combinations of semiconductor platforms per the desires of the user. Alternately, the parallel processing module 1406 may be implemented as a circuit board substrate and each of the parallel processing unit modules and/or memory 1020 modules may be packaged devices. In an embodiment, the central processing unit 1402, switch 1404, and the parallel processing module 1406 are situated on a single semiconductor platform.

In an embodiment, the signaling rate of each NVLink 1016 is 20 to 25 Gigabits/second and each parallel processing unit module includes six NVLink 1016 interfaces (as shown in FIG. 14, five NVLink 1016 interfaces are included for each parallel processing unit module). Each NVLink 1016 provides a data transfer rate of 25 Gigabytes/second in each direction, with six links providing 300 Gigabytes/second. The NVLink 1016 can be used exclusively for PPU-to-PPU communication as shown in FIG. 14, or some combination of PPU-to-PPU and PPU-to-CPU, when the central processing unit 1402 also includes one or more NVLink 1016 interfaces.

In an embodiment, the NVLink 1016 allows direct load/store/atomic access from the central processing unit 1402 to each parallel processing unit module's memory 1020. In an embodiment, the NVLink 1016 supports coherency operations, allowing data read from the memory 1020 modules to be stored in the cache hierarchy of the central processing unit 1402, reducing cache access latency for the central processing unit 1402. In an embodiment, the NVLink 1016 includes support for Address Translation Services (ATS), enabling the parallel processing unit module to directly access page tables within the central processing unit 1402. One or more of the NVLink 1016 may also be configured to operate in a low-power mode.

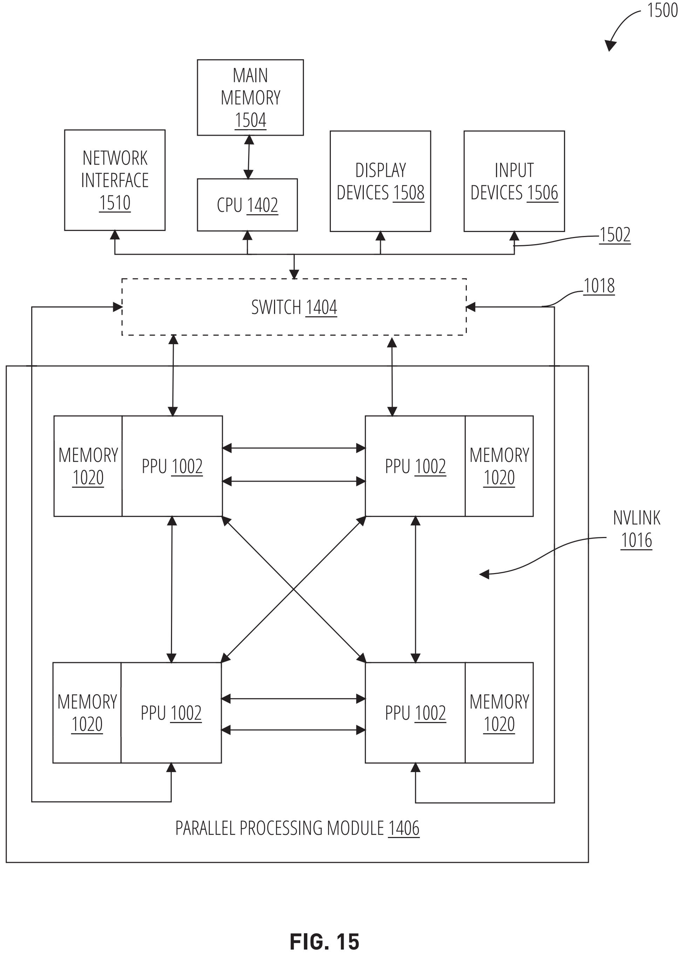

FIG. 15 depicts an exemplary processing system 1500 in which the various architecture and/or functionality of the various previous embodiments may be implemented. As shown, an exemplary processing system 1500 is provided including at least one central processing unit 1402 that is connected to a communications bus 1502. The communication communications bus 1502 may be implemented using any suitable protocol, such as PCI (Peripheral Component Interconnect), PCI-Express, AGP (Accelerated Graphics Port), HyperTransport, or any other bus or point-to-point communication protocol(s). The exemplary processing system 1500 also includes a main memory 1504. Control logic (software) and data are stored in the main memory 1504 which may take the form of random access memory (RAM).

The exemplary processing system 1500 also includes input devices 1506, the parallel processing module 1406, and display devices 1508, e.g. a conventional CRT (cathode ray tube), LCD (liquid crystal display), LED (light emitting diode), plasma display or the like. User input may be received from the input devices 1506, e.g., keyboard, mouse, touchpad, microphone, and the like. Each of the foregoing modules and/or devices may even be situated on a single semiconductor platform to form the exemplary processing system 1500. Alternately, the various modules may also be situated separately or in various combinations of semiconductor platforms per the desires of the user.

Further, the exemplary processing system 1500 may be coupled to a network (e.g., a telecommunications network, local area network (LAN), wireless network, wide area network (WAN) such as the Internet, peer-to-peer network, cable network, or the like) through a network interface 1510 for communication purposes.

The exemplary processing system 1500 may also include a secondary storage (not shown). The secondary storage includes, for example, a hard disk drive and/or a removable storage drive, representing a floppy disk drive, a magnetic tape drive, a compact disk drive, digital versatile disk (DVD) drive, recording device, universal serial bus (USB) flash memory. The removable storage drive reads from and/or writes to a removable storage unit in a well-known manner.

Computer programs, or computer control logic algorithms, may be stored in the main memory 1504 and/or the secondary storage. Such computer programs, when executed, enable the exemplary processing system 1500 to perform various functions. The main memory 1504, the storage, and/or any other storage are possible examples of computer-readable media.

The architecture and/or functionality of the various previous figures may be implemented in the context of a general computer system, a circuit board system, a game console system dedicated for entertainment purposes, an application-specific system, and/or any other desired system. For example, the exemplary processing system 1500 may take the form of a desktop computer, a laptop computer, a tablet computer, servers, supercomputers, a smart-phone (e.g., a wireless, hand-held device), personal digital assistant (PDA), a digital camera, a vehicle, a head mounted display, a hand-held electronic device, a mobile phone device, a television, workstation, game consoles, embedded system, and/or any other type of logic.

While various embodiments have been described above, it should be understood that they have been presented by way of example only, and not limitation. Thus, the breadth and scope of a preferred embodiment should not be limited by any of the above-described exemplary embodiments, but should be defined only in accordance with the following claims and their equivalents.

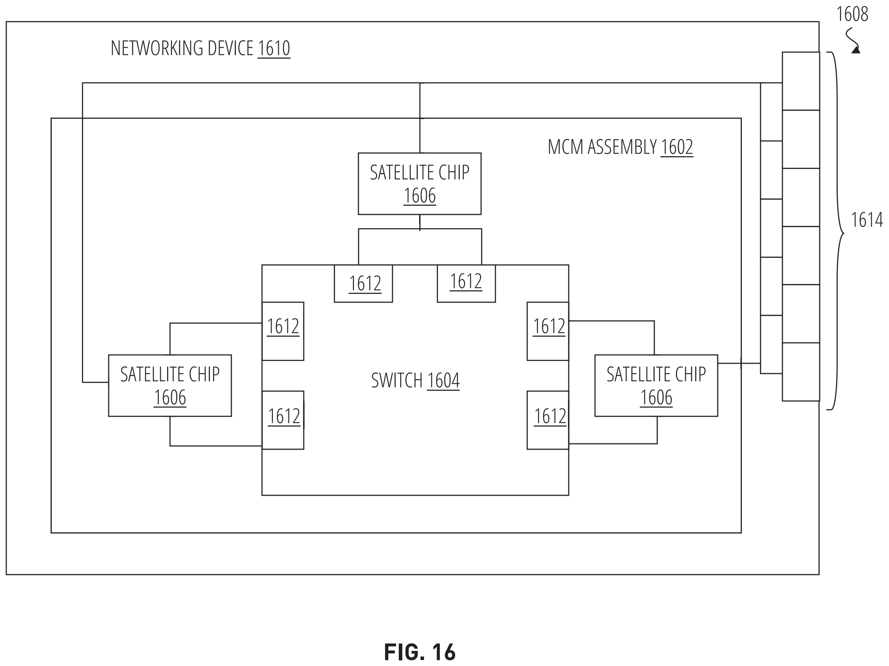

FIG. 16 depicts a co-packaged system that may utilize the mechanisms disclosed herein, in accordance with one embodiment. Co-packaging may refer to the close integration of different electrical and/or optoelectronic chips in the same package. In some embodiments, the different chips that constitute the co-packaged system may be assembled on a single substrate in what is typically called a multi-chip module (MCM) assembly 1602. The multi-chip module assembly 1602 may include switch 1604 surrounded by peripheral chips, which may also be referred to as satellite chips 1606 or chiplets. In some embodiments, the switch 1604 and satellite chips 1606 may all be mounted on a common substrate, although such a configuration may not be required.

The multi-chip module assembly 1602 may be disposed proximate to a front panel 1608 of a housing of a networking device 1610 (e.g., the network device(s) of a data center). In some embodiments, the switch 1604 may include one or more core digital Application Specific Integrated Circuits (ASICs), CPUs, GPUs, microprocessors, FPGAs, combinations thereof, and the like. The disclosed mechanisms may be utilized for example for communication between or within components of the multi-chip module assembly 1602.

The switch 1604 may include a number of input ports and/or output ports 1612. The Input/Output (I/O) ports 1612 may include electrical ports and/or optical ports. The switch 1604 may include a combination of electrical blocks and optical blocks. The electrical blocks of the switch 1604 may include a number of electrical switches that are configured to route signals in an electrical domain. The optical blocks of the switch 1604 may include a number of optical components that are configured to generate, detect and route signals in an optical domain. In some embodiments, a configuration of the optical block(s) and a configuration of the electrical block(s) depends (e.g., is based on) on the number of optical ports in the I/O ports 1612.

Optical connectors 1614 may be disposed proximate to the front panel 1608. In some embodiments, connectivity between the multi-chip module assembly 1602 and optical connectors 1614 may be implemented using optical fibers. This connection may be made directly with an optical I/O port 1612 of the switch 1604 or may be made with one or more of the satellite chips 1606. The connection may be made with one or more of the satellite chips 1606 because the satellite chips 1606 may include electro-optic converters and, possibly, a serializer/deserialized to natively support the connection. In some embodiments, the satellite chips 1606 may include one or more of a DSP processor, driver, trans-impedance amplifier, laser, modulator, photodiode, serializer-deserializer, or the like.

In the context of high-throughput switches and optoelectronics, co-packaging may enable relocation of optoelectronic transceivers from the front panel 1608, where they are deployed in the form of pluggable modules, to the satellite chips 1606 of the networking devices 1610. In some embodiments, the fiber optical I/Os from the satellite chips 1606 may be disposed at the front panel 1608, replacing the bulky pluggable ports. This saves area proximate to the front panel 1608 which may be utilized to accommodate integration of one or more other systems.

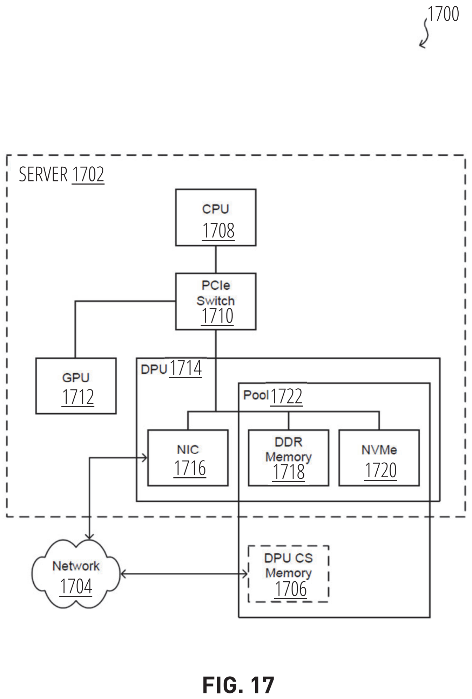

FIG. 17 depicts an example computing environment 1700 in which forward pass offloading to available memory can be performed, in accordance with at least one embodiment. It should be appreciated that embodiments of the present disclosure may also be used with reference to alternative environments and that specific discussion of components may be provided by way of non-limiting example and may include equivalents. Moreover, various features have been removed for clarity and conciseness. Additionally, systems and methods may be used with a variety of different architectures.

The disclosed mechanisms may be utilized for example for communication between or within components of the server 1702, and/or between components of the server 1702 and devices on the network 1704, e.g., the memory 1706.

The example computing environment 1700 may include a server 1702 which may be used to perform HPC workloads, such as AI training or machine learning model training. In an embodiment, the server 1702 may be an application instance or a compute node. The server 1702 may include a CPU 1708 associated with a switch 1710, such as a peripheral component interconnect express (PCIe) switch, which may control at least some data transmission over communication paths interconnecting various components. In an embodiment, the CPU 1708 may include a root complex processor.

The PCIe switch 1710 may also be associated with a GPU 1712 and a DPU 1714, and may transmit data between at least some of the CPU 1708, the GPU 1712, the DPU 1714, and other components. In an embodiment, the PCIe switch 1710 may be associated with more than one GPU or more than one DPU. In another embodiment, the PCIe switch 1710 may be located within the DPU 1714. The PCIe switch 1710 may manage the transfer of at least some data between the CPU 1708, the GPU 1712, and the DPU 1714. In another embodiment, the number of GPUs associated with the PCIe switch 1710 may be equal to the number of DPUs associated with the PCIe switch 1710. In at least one embodiment, the server 1702 may include, without limitation, any number of the CPUs 1708, the PCIe switches 1710, the GPUs 1712, and/or the DPUs 1714, in any combination. For example, in at least one embodiment, server 1702 could include eight, sixteen, thirty-two, and/or more GPUs 1712.

In at least one embodiment, communication paths interconnecting various components, including but not limited to the CPU 1708, the PCIe switch 1710, the GPU 1712, and the DPU 1714, in FIG. 17 may be implemented using any suitable protocols, such as peripheral component interconnect (PCI) based protocols (e.g., PCIe), or other bus or point-to-point communication interfaces and/or protocol(s), such as NV-Link high-speed interconnect, or interconnect protocols.

The DPU 1714 may include a network interface card (NIC) 1716, a DDR memory 1718, and a non-volatile memory express (NVMe) device 1720. The NIC 1716 may be able to interface with a network 1704, which may also interface with additional NVMe devices available to the DPU 1714, such as over fabric. In an embodiment, the DPU 1714 may not include the NVMe device 1720. In another embodiment, the NVMe device 1720 may be located on the server 1702 and not on the DPU 1714.

In yet another embodiment, the computing environment 1700 may include more than one of the NVMe device 1720, such as a first NVMe device in the DPU 1714 and a second NVMe device on the server 1702 associated directly with the PCIe switch 1710. In an embodiment, the DPU 114 may not include the DDR memory 1718 and may include a computational storage services (CSS) in place of, or in addition to, the DDR memory 1718. For example, computing environment 1700 may include DPU computational storage (CS) memory 1706 available to the DPU 1714 as part of the CSS. The network 1704 may be able to interface with the DPU CS memory 1706 through the NIC 1716, according to any suitable interface protocol, such as remote direct memory access (RDMA) over Ethernet, InfiniBand, Fiber Channel, etc..

The total memory of the computing environment 1700 available for data storage may be expanded through the use of the DPU 1714 on nodes of the system. The DPU 1714 may have access to a pool 1722 of memory already available to the server 1702, such as double data rate (DDR) memory, on-board NVMe devices, NVMe devices over fabric, and CS. The pool 1722 of memory may include at least one of the DDR memory 1718, NVMe device 1720, and the DPU CS memory 1706.

The DPU 1714 may also be able to access the available memory of other DPUs as part of the pool 1722, and other DPUs may be able to access the available memory of DPU 1714, such as the pool 1722 . This available memory can be accessed and utilized for data storage, without the addition of compute resources, such as compute nodes, which would be required using other solutions.

The available pool 1722 accessible to the DPU 1714 may be provisioned for the server 1702 to expand the total memory available for data storage, such as to reduce the data storage load on the CPU 1708 or the GPU 1712, which can instead increase the utilization of their memory for processing. For example, during training of an AI, the model states, residual states, activation functions, and checkpoints can be stored, or offloaded, on the pool 1722 accessible to the DPU 1714.

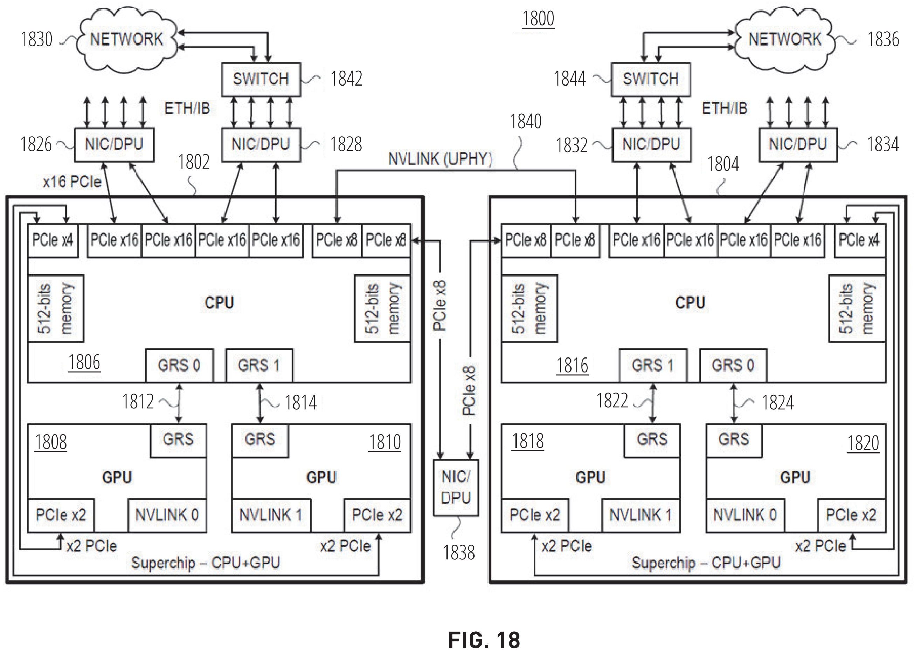

FIG. 18 depicts a block diagram that schematically illustrates a computing system 1800, e.g., a data center or a High-Performance Computing (HPC) cluster, in accordance with an embodiment that is described herein. The computing system 1800 comprises a plurality of subsystems, e.g. multiple processing devices coupled to each other, multiple network devices, and multiple networks, according to at least one embodiment. Computing system 1800 is designed with multiple integrated circuits (referred to as processing devices), where each integrated circuit can include one or more CPUs and GPUs, forming a powerful and flexible architecture.

The various processing devices are interconnected via an NVLink or other high-speed interconnect, enabling high-speed communication between the subsystems, and are also connected through a NIC or DPU (Data Processing Unit) to ensure efficient data transfer across computing system 1800 and to one or more external networks 1830, 1836. In the present example, system 1800 comprises a packet switch 1842 that connects NIC/DPU 1828 to network 1830, and a packet switch 1844 that connects NIC/DPU 1832 to network 1836.

The disclosed mechanisms may be utilized for example for communication between or within any components of the computing system 1800.

The coupling of processing devices through NVLink allows for seamless data exchange and parallel processing, enhancing overall computational performance. The processing devices are connected to multiple networks through one or more network interface cards (NICs) or DPUs, enabling the system to handle complex, multi-network tasks with high bandwidth and low latency. This configuration is highly suitable for demanding applications that require significant processing power, such as artificial intelligence (AI), machine learning (ML), and data-intensive computing, while ensuring robust connectivity and scalability across various networked environments. The integrated circuits of the computing system 1800 can include one or more CPUs and one or more GPUs.

FIG. 18 also depicts an example of a multi-GPU architecture. As depicted, computing system 1800 includes a processing device 1802 with a multi-GPU architecture. In particular, processing device 1802 may be a system-on-chip that includes multiple subsystems such as a CPU 1806, a GPU 1808, and a GPU 1810. CPU 1806 can be coupled to GPU 1808 via a die-to-die (D2D) or chip-to-chip (C2C) interconnect 1812, such as a Ground-Referenced Signaling interconnect (GRS interconnect). CPU 1806 can be coupled to GPU 1810 via a D2D or C2C interconnect 1814. CPU 1806 can also couple to GPU 1808 and GPU 1810 via PCIe interconnects.

CPU 1806 can be coupled to one or more NICs or DPUs, which are coupled to one or more networks. For example, as depicted in FIG. 18, CPU 1806 is coupled to a first NIC/DPU 1826, which is coupled to a network 1830. CPU 1806 is also coupled to a second NIC/DPU 1828, which is coupled to network 1830 via switch 1842. NIC/DPU 1826 and NIC/DPU 1828 can be coupled to network 1830 over Ethernet (ETH), NVLINK or InfiniBand (IB) connections, for example.

Computing system 1800 also includes a processing device 1804 with a multi-GPU architecture. In particular, processing device 1804 includes multiple subsystems including a CPU 1816, a GPU 1818, and a GPU 1820. CPU 1816 can be coupled to GPU 1818 via an D2D or C2C interconnect 1822. CPU 1816 can be coupled to GPU 1820 via a D2D or C2C interconnect 1824. CPU 1816 can also couple to GPU 1818 and GPU 1820 via PCIe interconnects. CPU 1816 can be coupled to one or more NICs or DPUs, which are coupled to one or more networks. For example, as illustrated in FIG. 18, CPU 1816 is coupled to a first NIC/DPU 1832, which is coupled to a network 1836. CPU 1816 is also coupled to a second NIC/DPU 1834, which is coupled to network 1836 via switch 1844. NIC/DPU 1832 and NIC/DPU 1834 can be coupled to network 1836 over Ethernet (ETH), NVLINK or InfiniBand (IB) connections.

In at least one embodiment, processing device 1802 and processing device 1804 may communicate with each other via a NIC/DPU 1838, such as over PCIe interconnects. Processing device 1802 and processing device 1804 may also communicate with each other over a high-bandwidth communication interconnects 1840, such as an NVLink interconnect or other high-speed interconnects. The packet switches in FIG. 18 may comprise, for example, Nvidia Quantum-2 switches. The NICs/DPUs in the figure may comprise, for example, Nvidia Bluefield DPUs.

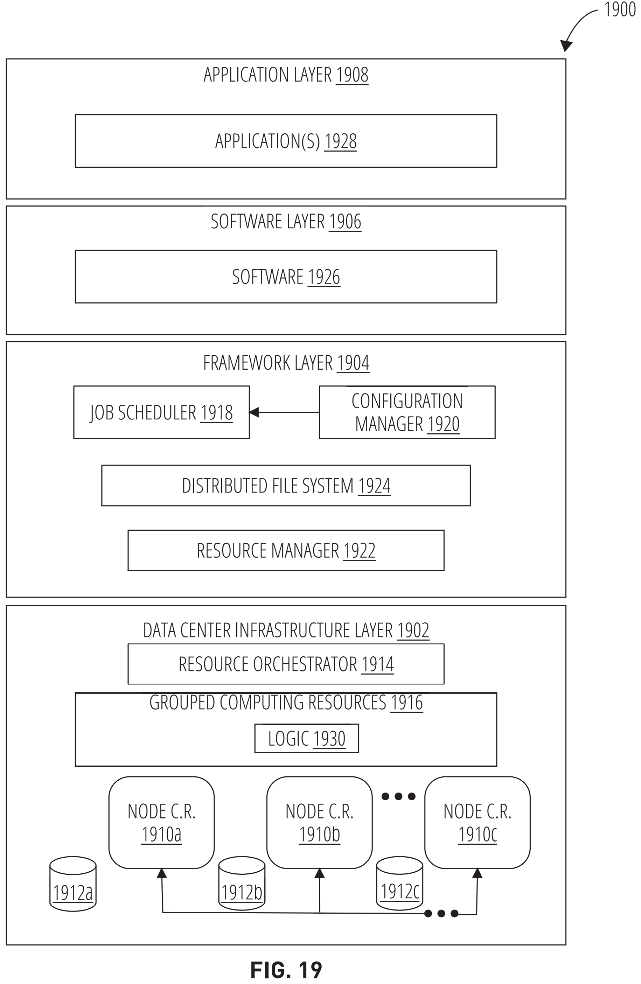

FIG. 19 depicts an exemplary data center 1900, in accordance with at least one embodiment. In at least one embodiment, data center 1900 includes, without limitation, a data center infrastructure layer 1902, a framework layer 1904, a software layer 1906, and an application layer 1908. The disclosed mechanisms may be utilized in the data center 1900 for example between the node computing resource 1910a, 1910b, 1910c, between internal components of the node computing resource 1910a, 1910b, 1910c, among or between various memory devices 1912a, 1912b, 1912c of the data center 1900, and/or internally within one or more internal components of the node computing resource 1910a, 1910b, 1910c.

In at least one embodiment, as depicted in FIG. 19, data center infrastructure layer 1902 may include a resource orchestrator 1914, grouped computing resources 1916, and node computing resources (node C.R.s) 1910a, 1910b, 1910c, where "N" represents any whole, positive integer. In at least one embodiment, node computing resources may include, but are not limited to, any number of central processing units (CPUs) or other processors (including accelerators, field programmable gate arrays (FPGAs), graphics processors, etc.), memory devices 1912a, 1912b, 1912c (e.g., dynamic random-access memory, solid state or disk drives, etc.), network input/output (NW I/O) devices, network switches, virtual machines (VMs), power modules, and cooling modules, etc. In at least one embodiment, one or more node computing resources from among node computing resources 1910a, 1910b, 1910c may be a server having one or more of the above-mentioned computing resources.

In at least one embodiment, grouped computing resources 1916 may include separate groupings of node computing resources housed within one or more racks (not shown), or many racks housed in data centers at various geographical locations (also not shown). Separate groupings of node computing resources within grouped computing resources 1916 may include grouped compute network, memory, or storage resources that may be configured or allocated to support one or more workloads. In at least one embodiment, several node computing resources including CPUs or processors may be grouped within one or more racks to provide compute resources to support one or more workloads. In at least one embodiment, one or more racks may also include any number of power modules, cooling modules, and network switches, in any combination.

In at least one embodiment, resource orchestrator 1914 may configure or otherwise control one or more node computing resources 1910a, 1910b, 1910c and/or grouped computing resources 1916. In at least one embodiment, resource orchestrator 1914 may include a software design infrastructure ("SDI") management entity for data center 1900. In at least one embodiment, resource orchestrator 1914 may include hardware, software, or some combination thereof.

In at least one embodiment, as depicted in FIG. 19, framework layer 1904 includes, without limitation, a job scheduler 1918, a configuration manager 1920, a resource manager 1922, and a distributed file system 1924. In at least one embodiment, framework layer 1904 may include a framework to support software 1926 of software layer 1906 and/or one or more application(s) 1928 of application layer 220. In at least one embodiment, software 1926 or application(s) 1928 may respectively include web-based service software or applications, such as those provided by Amazon Web Services, Google Cloud, and Microsoft Azure. In at least one embodiment, framework layer 1904 may be, but is not limited to, a type of free and open-source software web application framework such as Apache SPARK^{™} (hereinafter "Spark) that may utilize a distributed file system 1924 for large-scale data processing (e.g., "big data"). In at least one embodiment, job scheduler 1918 may include a Spark driver to facilitate scheduling of workloads supported by various layers of data center 1900. In at least one embodiment, configuration manager 1920 may be capable of configuring different layers such as software layer 1906 and framework layer 1904, including Spark and distributed file system 1924 for supporting large-scale data processing. In at least one embodiment, resource manager 1922 may be capable of managing clustered or grouped computing resources mapped to or allocated for support of distributed file system 1924 and job scheduler 1918. In at least one embodiment, clustered or grouped computing resources may include grouped computing resources 1916 at data center infrastructure layer 1902. In at least one embodiment, resource manager 1922 may coordinate with resource orchestrator 1914 to manage these mapped or allocated computing resources.

In at least one embodiment, software 1926 included in software layer 1906 may include software used by at least portions of node computing resources 1910a, 1910b, 1910c, grouped computing resources 1916, and/or distributed file system 1924 of framework layer 1904. One or more types of software may include, but are not limited to, Internet web page search software, e-mail virus scan software, database software, and streaming video content software.

In at least one embodiment, application(s) 1928 included in application layer 1908 may include one or more types of applications used by at least portions of node computing resources 1910a, 1910b, 1910c, grouped computing resources 1916, and/or distributed file system 1924 of framework layer 1904. In at least one or more types of applications may include, without limitation, Compute Unified Device Architecture (CUDA) applications, 5G network applications, artificial intelligence applications, data center applications, and/or variations thereof. In at least one embodiment, one or more types of applications may include, but are not limited to, any number of a genomics application, a cognitive compute, application and a machine learning application, including training or inferencing software, machine learning framework software (e.g., PyTorch, TensorFlow, Caffe, etc.) or other machine learning applications used in conjunction with one or more embodiments.

In at least one embodiment, any of configuration manager 1920, resource manager 1922, and resource orchestrator 1914 may implement any number and type of self-modifying actions based on any amount and type of data acquired in any technically feasible fashion. In at least one embodiment, self-modifying actions may relieve a data center operator of data center 1900 from making possibly bad configuration decisions and possibly avoiding underutilized and/or poorly performing portions of a data center.

In at least one embodiment, data center 1900 may comprise tools, services, software or other resources to train one or more machine learning models or predict or infer information using one or more machine learning models according to one or more embodiments described herein. For example, in at least one embodiment, a machine learning model may be trained by calculating weight parameters according to a neural network architecture using software and computing resources described above with respect to data center 1900. In at least one embodiment, trained machine learning models corresponding to one or more neural networks may be used to infer or predict information using resources described above with respect to data center 1900by using weight parameters calculated through one or more training techniques described herein.

In at least one embodiment, data center 1900 may use CPUs, application-specific integrated circuits (ASICs), GPUs, FPGAs, or other hardware to perform training and/or inferencing using above-described resources. Moreover, one or more software and/or hardware resources described above may be configured as a service to allow users to train or performing inferencing of information, such as image recognition, speech recognition, or other artificial intelligence services.

The grouped computing resources 1916 may be configured with logic 1930 to implement the application(s) 1928. For example, the logic 1930 may comprise inference and/or training logic to perform deep learning inferencing and/or training operations associated with one or more embodiments. In at least one embodiment, logic 1930 may configure the data center 1900 for inferencing or predicting operations based, at least in part, on weight parameters calculated using neural network training operations, neural network functions and/or architectures, or neural network use cases described herein.

### LISTING OF DRAWING ELEMENTS

802 process
804 initiator device
806 memory
808 memory fabric
810 memory
812 target device
814 process
1002 parallel processing unit
1004 I/O unit
1006 front-end unit
1008 scheduler unit
1010 work distribution unit
1012 hub
1014 crossbar
1016 NVLink
1018 interconnect
1020 memory
1100 general processing cluster
1102 pipeline manager
1104 pre-raster operations unit
1106 raster engine
1108 work distribution crossbar
1110 memory management unit
1112 data processing cluster
1114 primitive engine
1116 M-pipe controller
1200 memory partition unit
1202 raster operations unit
1204 level two cache
1206 memory interface
1300 streaming multiprocessor
1302 instruction cache
1304 scheduler unit
1306 register file
1308 core
1310 special function unit
1312 load/store unit
1314 interconnect network
1316 shared memory/L1 cache
1318 dispatch
1400 processing system
1402 central processing unit
1404 switch
1406 parallel processing module
1500 exemplary processing system
1502 communications bus
1504 main memory
1506 input devices
1508 display devices
1510 network interface
1602 multi-chip module assembly
1604 switch
1606 satellite chip
1608 front panel
1610 networking device
1612 I/O port
1614 optical connectors
1700 computing environment
1702 server
1704 network
1706 memory
1708 CPU
1710 switch
1712 GPU
1714 DPU
1716 NIC
1718 DDR memory
1720 NVMe device
1722 pool
1800 computing system
1802 processing device
1804 processing device
1806 CPU
1808 GPU
1810 GPU
1812 interconnect
1814 interconnect
1816 CPU
1818 GPU
1820 GPU
1822 interconnect
1824 interconnect
1826 NIC/DPU
1828 NIC/DPU
1830 network
1832 NIC/DPU
1834 NIC/DPU
1836 network
1838 NIC/DPU
1840 interconnect
1842 switch
1844 switch
1900 data center
1902 data center infrastructure layer
1904 framework layer
1906 software layer
1908 application layer
1910a node computing resource
1910b node computing resource
1910c node computing resource
1912a memory device
1912b memory device
1912c memory device
1914 resource orchestrator
1916 grouped computing resources
1918 job scheduler
1920 configuration manager
1922 resource manager
1924 distributed file system
1926 software
1928 application(s)
1930 logic

Various functional operations described herein may be implemented in logic that is referred to using a noun or noun phrase reflecting said operation or function. For example, an association operation may be carried out by an "associator" or "correlator". Likewise, switching may be carried out by a "switch", selection by a "selector", and so on. "Logic" refers to machine memory circuits and non-transitory machine readable media comprising machine-executable instructions (software and firmware), and/or circuitry (hardware) which by way of its material and/or material-energy configuration comprises control and/or procedural signals, and/or settings and values (such as resistance, impedance, capacitance, inductance, current/voltage ratings, etc.), that may be applied to influence the operation of a device. Magnetic media, electronic circuits, electrical and optical memory (both volatile and nonvolatile), and firmware are examples of logic. Logic specifically excludes pure signals or software per se (however does not exclude machine memories comprising software and thereby forming configurations of matter). Logic symbols in the drawings should be understood to have their ordinary interpretation in the art in terms of functionality and various structures that may be utilized for their implementation, unless otherwise indicated.

Within this disclosure, different entities (which may variously be referred to as "units," "circuits," other components, etc.) may be described or claimed as "configured" to perform one or more tasks or operations. This formulation-[entity] configured to [perform one or more tasks]-is used herein to refer to structure (i.e., something physical, such as an electronic circuit). More specifically, this formulation is used to indicate that this structure is arranged to perform the one or more tasks during operation. A structure can be said to be "configured to" perform some task even if the structure is not currently being operated. A "credit distribution circuit configured to distribute credits to a plurality of processor cores" is intended to cover, for example, an integrated circuit that has circuitry that performs this function during operation, even if the integrated circuit in question is not currently being used (e.g., a power supply is not connected to it). Thus, an entity described or recited as "configured to" perform some task refers to something physical, such as a device, circuit, memory storing program instructions executable to implement the task, etc. This phrase is not used herein to refer to something intangible.

The term "configured to" is not intended to mean "configurable to." An unprogrammed FPGA, for example, would not be considered to be "configured to" perform some specific function, although it may be "configurable to" perform that function after programming.

Reciting in the appended claims that a structure is "configured to" perform one or more tasks is expressly intended not to invoke 35 U.S.C. § 112(f) for that claim element. Accordingly, claims in this application that do not otherwise include the "means for" [performing a function] construct should not be interpreted under 35 U.S.C § 112(f).

As used herein, the term "based on" is used to describe one or more factors that affect a determination. This term does not foreclose the possibility that additional factors may affect the determination. That is, a determination may be solely based on specified factors or based on the specified factors as well as other, unspecified factors. Consider the phrase "determine A based on B." This phrase specifies that B is a factor that is used to determine A or that affects the determination of A. This phrase does not foreclose that the determination of A may also be based on some other factor, such as C. This phrase is also intended to cover an embodiment in which A is determined based solely on B. As used herein, the phrase "based on" is synonymous with the phrase "based at least in part on."

As used herein, the phrase "in response to" describes one or more factors that trigger an effect. This phrase does not foreclose the possibility that additional factors may affect or otherwise trigger the effect. That is, an effect may be solely in response to those factors, or may be in response to the specified factors as well as other, unspecified factors. Consider the phrase "perform A in response to B." This phrase specifies that B is a factor that triggers the performance of A. This phrase does not foreclose that performing A may also be in response to some other factor, such as C. This phrase is also intended to cover an embodiment in which A is performed solely in response to B.

As used herein, the terms "first," "second," etc. are used as labels for nouns that they precede, and do not imply any type of ordering (e.g., spatial, temporal, logical, etc.), unless stated otherwise. For example, in a register file having eight registers, the terms "first register" and "second register" can be used to refer to any two of the eight registers, and not, for example, just logical registers 0 and 1.

When used in the claims, the term "or" is used as an inclusive or and not as an exclusive or. For example, the phrase "at least one of x, y, or z" means any one of x, y, and z, as well as any combination thereof.

As used herein, a recitation of "and/or" with respect to two or more elements should be interpreted to mean only one element, or a combination of elements. For example, "element A, element B, and/or element C" may include only element A, only element B, only element C, element A and element B, element A and element C, element B and element C, or elements A, B, and C. In addition, "at least one of element A or element B" may include at least one of element A, at least one of element B, or at least one of element A and at least one of element B. Further, "at least one of element A and element B" may include at least one of element A, at least one of element B, or at least one of element A and at least one of element B.

Although the terms "step" and/or "block" may be used herein to connote different elements of methods employed, the terms should not be interpreted as implying any particular order among or between various steps herein disclosed unless and except when the order of individual steps is explicitly described.

Having thus described illustrative embodiments in detail, it will be apparent that modifications and variations are possible without departing from the scope of the intended invention as claimed. The scope of inventive subject matter is not limited to the depicted embodiments but is rather set forth in the following Claims.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

The disclosure of this application also includes the following numbered clauses:
Clause 1. An inter-process communication method comprising:
   dividing a total payload of a first memory command among a plurality of packets;
   encoding a last-transmitted packet of the plurality of packets to include a metadata code in the total payload;
   communicating the packets over a network from a first process to a second process;
   writing payloads of the packets to a memory in a sequential address order, such that the metadata code is written to a particular address; and
   the second process generating an acknowledgment of the first memory command to the first process on condition that reading the particular address returns the metadata code.
Clause 2. The method of clause 1, further comprising:
   on condition that the acknowledgment of the first memory command is not received at the first process within a configured time interval, the first process transmitting a second memory command to the second process.
Clause 3. The method of clause 2, wherein the second memory command comprises a total payload identical to the total payload of the first memory command, including a metadata code identical to the metadata code of the first memory command.
Clause 4. The method of clause 2, wherein the second memory command comprises a total payload that comprises a same data payload as the first memory command and a different metadata code from the metadata code of the first memory command.
Clause 5. The method of clause 1, wherein the total payload comprises an LL128 encoding.
Clause 6. The method of clause 1, wherein the total payload comprises an LL256 encoding.
Clause 7. The method of clause 1, wherein the total payload comprises four bytes of data and four bytes of metadata.
Clause 8. The method of clause 1, wherein the sequential address order is a sequentially increasing order.
Clause 9. The method of clause 8, wherein the particular address is a highest address of the sequential address order.
Clause 10. The method of clause 1, wherein the first process and the second process implement at least part of a collective operation.
Clause 11. The method of clause 1, wherein application layer logic of the second process reads the particular address and generates the acknowledgment of the first memory command to application layer logic of the first process.
Clause 12. The method of clause 11, further comprising:
   the application layer logic of the first process generating an acknowledgment of the acknowledgment to the application layer logic of the second process.
Clause 13. The method of clause 12, wherein the acknowledgment of the acknowledgment is encoded in the total payload of a second memory command communicated from the first process to the second process.
Clause 14. The method of clause 1, wherein the first process executes on a first graphics processing unit and the second process executes on a second graphics processing unit.
Clause 15. A system comprising:
   a switch;
   an application process;
   logic configured to:
      divide a total payload of a first memory command among a plurality of packets;
      encode a last-transmitted packet of the plurality of packets to include a metadata code in the total payload;
      communicate the packets through the switch;
      write payloads of the packets to a memory in a sequential address order, such that the metadata code is written to a particular address; and
      communicate an acknowledgment of the first memory command from the application process through the switch on condition that reading the particular address returns the metadata code.
Clause 16. The system of clause 15, further comprising:
   a second process; and
   the logic further configured to:
      detect that the first memory command is not received by the first process within a configured time interval; and
      communicate a second memory command to the second process from the first process if the first memory command is not received by the first process.
Clause 17. The system of clause 16, wherein the second memory command comprises a total payload identical to the total payload of the first memory command, including a metadata code identical to the metadata code of the first memory command.
Clause 18. The system of clause 15, wherein the total payload comprises an LL128 encoding.
Clause 19. The system of clause 15, wherein the sequential address order is a sequentially increasing order.
Clause 20. The system of clause 19, wherein the particular address is a highest address of the sequential address order.
Clause 21. The system of clause 15, wherein the first process and a second process implement at least part of a collective operation.
Clause 22. A data center comprising:
   one or more non-volatile memory comprising machine-readable instructions comprising a first process and a second process;
   logic to implement communication between the first process and the second process, the logic configured to:
      divide a total payload of a first memory command among a plurality of packets;
      encode a last-transmitted packet of the plurality of packets to include a metadata code in the total payload;
      communicate the packets over a network from the first process to the second process;
      write payloads of the packets to a memory in a sequential address order, such that the metadata code is written to a particular address; and
      generate an acknowledgment of the first memory command from the second process to the first process on condition that reading the particular address returns the metadata code.
Clause 23. The data center of clause 22, the machine-readable instructions of the second process configured to:
   read the particular address and generate the acknowledgment of the first memory command to application layer logic of the first process.
Clause 24. The data center of clause 23, the machine-readable instructions of the second process configured to:
   generate an acknowledgment of the acknowledgment from application layer logic of the first process to the application layer logic of the second process.
Clause 25. The data center of clause 24, wherein the acknowledgment of the acknowledgment is encoded in the total payload of a second memory command communicated from the first process to the second process.

## Claims

1. An inter-process communication method comprising:
dividing a total payload of a first memory command among a plurality of packets;
encoding a last-transmitted packet of the plurality of packets to include a metadata code in the total payload;
communicating the packets over a network from a first process to a second process;
writing payloads of the packets to a memory in a sequential address order, such that the metadata code is written to a particular address; and
the second process generating an acknowledgment of the first memory command to the first process on condition that reading the particular address returns the metadata code.

2. The method of claim 1, further comprising:
on condition that the acknowledgment of the first memory command is not received at the first process within a configured time interval, the first process transmitting a second memory command to the second process.

3. The method of claim 2, wherein the second memory command comprises a total payload identical to the total payload of the first memory command, including a metadata code identical to the metadata code of the first memory command.

4. The method of claim 2, wherein the second memory command comprises a total payload that comprises a same data payload as the first memory command and a different metadata code from the metadata code of the first memory command.

5. The method of any preceding claim, wherein the total payload comprises an LL128 encoding.

6. The method of any of claims 1-4, wherein the total payload comprises an LL256 encoding.

7. The method of any preceding claim, wherein the total payload comprises four bytes of data and four bytes of metadata.

8. The method of any preceding claim, wherein the sequential address order is a sequentially increasing order.

9. The method of claim 8, wherein the particular address is a highest address of the sequential address order.

10. The method of any preceding claim, wherein the first process and the second process implement at least part of a collective operation.

11. The method of any preceding claim, wherein application layer logic of the second process reads the particular address and generates the acknowledgment of the first memory command to application layer logic of the first process.

12. The method of claim 11, further comprising:
the application layer logic of the first process generating an acknowledgment of the acknowledgment to the application layer logic of the second process, wherein the acknowledgment of the acknowledgment is encoded in the total payload of a second memory command communicated from the first process to the second process.

13. The method of any preceding claim, wherein the first process executes on a first graphics processing unit and the second process executes on a second graphics processing unit.

14. A system comprising:
a switch;
an application process;
logic configured to:
divide a total payload of a first memory command among a plurality of packets;
encode a last-transmitted packet of the plurality of packets to include a metadata code in the total payload;
communicate the packets through the switch;
write payloads of the packets to a memory in a sequential address order, such that the metadata code is written to a particular address; and
communicate an acknowledgment of the first memory command from the application process through the switch on condition that reading the particular address returns the metadata code.

15. A data center comprising:
one or more non-volatile memory comprising machine-readable instructions comprising a first process and a second process;
logic to implement communication between the first process and the second process, the logic configured to:
divide a total payload of a first memory command among a plurality of packets;
encode a last-transmitted packet of the plurality of packets to include a metadata code in the total payload;
communicate the packets over a network from the first process to the second process;
write payloads of the packets to a memory in a sequential address order, such that the metadata code is written to a particular address; and
generate an acknowledgment of the first memory command from the second process to the first process on condition that reading the particular address returns the metadata code.
